# EUROPEAN PATENT APPLICATION

(11) **EP 2 913 700 A1**
(43) Date of publication of application: **02.09.2015**
(21) Application number: 15156777.3
(22) Date of filing: 26.02.2015
(51) Int. Cl.: G02B 26/00

(54) **Light filter, optical module, and electronic device**

(30) Priority: 28.02.2014 JP 2014038179
(71) Applicant: Seiko Epson Corporation, Shinjuku-ku Tokyo 163-0811 (JP)
(72) Inventor: Shinto, Susumu, Nagano, 392-8502 (JP); Kitahara, Koji, Nagano, 392-8502 (JP); Sakashita, Tomoki, Nagano, 392-8502 (JP)
(74) Representative: Hoffmann Eitle

(57) **Abstract**

A light filter includes a fixed substrate (14), a movable portion (13) which is arranged to face the fixed substrate, a fixed reflective film (44) which is disposed in the fixed substrate, and reflects a part of light and transmits a part of the light, a movable reflective film (35) which is disposed in the movable portion to face the fixed reflective film, and reflects a part of the light and transmits a part of the light, and an electrostatic actuator which controls a distance between the fixed reflective film and the movable reflective film, the fixed reflective film is interposed between a conductive film (32) and a protective film (36), and the conductive film and the protective film are formed of the same material, and have the same film thickness. Then, the movable reflective film is interposed between a conductive film and a protective film, and the conductive film and the protective film are formed of the same material, and have the same film thickness.

## Description

### BACKGROUND

### 1. Technical Field

The present invention relates to a light filter, an optical module, and an electronic device.

### 2. Related Art

In the related art, a light filter which selects light having a specific wavelength from incident light and transmits the light is utilized. Then, a light filter passing light having a specific wavelength is disclosed in JP-A1-300202. Accordingly, the light filter is arranged to face a pair of substrates, and reflective films each are disposed on facing surfaces of the substrate.

The light filter is able to selectively take light having a wavelength according to a gap between a pair of facing reflective films out. The gap between the reflective films is set by a thickness of a spacer film disposed between the substrates.

In the substrate, a base film of titanium oxide is disposed, and the reflective film is disposed to overlap with the film. In the reflective film, a silver film having high reflectance is used. Then, when the silver film is exposed in air, the silver film is sulfidized or influenced by humidity, and is degraded. Therefore, a protective film covering the reflective film is disposed, and thus the reflective film is prevented from being degraded. In the protective film, an inorganic substance such as SiO₂, TiO₂, ZnS, CaF₂, SiN₄, and Al₂O₃, an organic material such as a polyimide, and various photoresists are used.

A film of silver or a silver alloy used in the reflective film is a film in which arrangement of a metallic structure is easily displaced. Then, when a difference in internal stress between a surface and a back surface in the reflective film occurs, a protrusion referred to as a "hillock" or a "whisker" appears. Accordingly, reflectance of the reflective film decreases. In JP-A-1-300202, the reflective film is interposed between the base film and the protective film, but there is no countermeasure for a difference in stress between both surfaces. Therefore, there is a demand for a light filter having a structure in which an appearance of a protrusion due to a difference in internal stress between the both surfaces in the reflective film is suppressed, and light having a predetermined wavelength is able to be transmitted with high accuracy for a long period of time.

### SUMMARY

The invention can be realized in the following forms or application examples.

### Application Example 1

According to this application example, there is provided a light filter including a fixed substrate; a movable portion which is arranged to face the fixed substrate; a first reflective film which is disposed in the fixed substrate; a second reflective film which is disposed in the movable portion and faces the first reflective film; and a distance control unit which controls a distance between the first reflective film and the second reflective film, in which at least one of the first reflective film and the second reflective film is interposed between a first conductive film and a second conductive film, and the first conductive film and the second conductive film are formed of the same material and have the same film thickness.

In this case, the light filter includes the fixed substrate and the movable portion. The first reflective film is disposed in the fixed substrate, and the second reflective film is disposed in the movable portion. The first reflective film and the second reflective film are arranged to face each other. The first reflective film and the second reflective film reflect incident light. Multiple reflection of light occurs between the first reflective film and the second reflective film, and light having a coincident phase is transmitted in a direction in which the incident light progresses, and progresses. The distance control unit controls the distance between the first reflective film and the second reflective film. Accordingly, the light filter is able to control a wavelength of light to be transmitted.

The conductive films are disposed by interposing the reflective film therebetween. It is possible to prevent a surface of the reflective film from being damaged by the conductive film. Accordingly, the light filter is able to be manufactured with high quality. Then, the conductive film has conductivity, and thus it is possible to suppress occurrence of static electricity in the surface of the conductive film. Accordingly, it is possible to control the distance between the first reflective film and the second reflective film with high accuracy.

The first conductive film and the second conductive film are formed of the same material, and have the same film thickness. When the conductive film is disposed in the first surface of the reflective film, and the conductive film is not disposed in the second surface, the reflective film has a stress distribution which is different between the first surface and the second surface. Then, at this time, when there is a difference in internal stress between the first surface and the second surface of the reflective film, a protrusion referred to as a "hillock" or a "whisker" appears. Accordingly, reflectance of the reflective film decreases. In this application example, the first conductive film and the second conductive film interposing the reflective film therebetween are formed of the same material, and have the same film thickness. Accordingly, a difference in internal stress between the first surface and the second surface of the reflective film rarely occurs, and thus it is possible to prevent the protrusion from appearing. As a result thereof, the light filter is able to transmit light having a predetermined wavelength with high accuracy for a long period of time.

### Application Example 2

In the light filter according to the application example, the first conductive film and the second conductive film may be in the same shape.

In this case, the first conductive film and the second conductive film are in the same shape. Accordingly, the first conductive film and the second conductive film interposing the reflective film therebetween have the same stress distribution. Accordingly, a difference in internal stress between the first surface and the second surface of the reflective film rarely occurs, and thus it is possible to prevent the protrusion from appearing.

### Application Example 3

In the light filter according to the application example, a material of the first conductive film and the second conductive film may include IGO.

In this case, the material of the first conductive film and the second conductive film includes IGO. IGO has high light transmittance, and has transmittance greater than or equal to approximately 80% in a visible region. Accordingly, it is possible to efficiently transmit light having a predetermined wavelength.

### Application Example 4

In the light filter according to the application example, the first reflective film and the second reflective film may be electrically connected to each other.

In this case, the first reflective film and the second reflective film are electrically connected to each other. Accordingly, it is possible to suppress occurrence of static electricity between the first reflective film and the second reflective film. Accordingly, it is possible to control the distance between the first reflective film and the second reflective film with high accuracy.

### Application Example 5

In the light filter according to the application example, the light filter may further include a first external terminal which is connected to the first reflective film; and a second external terminal which is connected to the second reflective film.

In this case, the first external terminal connected to the first reflective film and the second external terminal connected to the second reflective film are disposed. Accordingly, it is possible to detect electric capacitance between the first reflective film and the second reflective film through the first external terminal and the second external terminal. Then, electric capacitance has a correlation with the distance between the first reflective film and the second reflective film. Accordingly, it is possible to detect the distance between the first reflective film and the second reflective film.

### Application Example 6

According to this application example, there is provided an optical module including the light filter according to any one of the application examples; and a containing portion which contains the light filter.

In this case, the light filter is contained in the containing portion, and is protected with the containing portion. Accordingly, it is possible to prevent the light filter from being damaged at the time of grasping the optical module. Then, in the light filter, a protrusion is prevented from appearing in the reflective film. Accordingly, the optical module is able to efficiently transmit light having a predetermined wavelength. Application Example 7

According to this application example, there is provided an electronic device including a light filter; and a control unit which controls the light filter, in which the light filter includes a fixed substrate, a movable portion which is arranged to face the fixed substrate, a first reflective film which is disposed in the fixed substrate, a second reflective film which is disposed in the movable portion and faces the first reflective film, and a distance control unit which controls a distance between the first reflective film and the second reflective film, and at least one of the first reflective film and the second reflective film is interposed between a first conductive film and a second conductive film, and the first conductive film and the second conductive film are formed of the same material and have the same film thickness.

In this case, the electronic device includes the light filter and the control unit, and the control unit controls the light filter. The light filter includes the distance control unit, the first reflective film, and the second reflective film, the distance control unit controls the distance between the first reflective film and the second reflective film. The conductive films are disposed by interposing the reflective film therebetween. It is possible to prevent a surface of the reflective film from being damaged by the conductive film. The conductive film has conductivity, and thus it is possible to suppress occurrence of static electricity in the surface of the conductive film. Accordingly, it is possible to control the distance between the first reflective film and the second reflective film with high accuracy.

The first conductive film and the second conductive film interposing the reflective film therebetween are formed of the same material, and have the same film thickness. Accordingly, a difference in internal stress between the first surface and the second surface of the reflective film rarely occurs, and thus it is possible to prevent the protrusion from appearing. Accordingly, the electronic device may be an electronic device having the light filter which is able to transmit light having a predetermined wavelength with high accuracy for a long period of time. Application Example 8

According to this application example, there is provided a light filter including a fixed substrate; a movable portion which is arranged to face the fixed substrate; a first reflective film which is disposed in the fixed substrate; a second reflective film which is disposed in the movable portion and faces the first reflective film; and a distance control unit which controls a distance between the first reflective film and the second reflective film, in which at least one of the first reflective film and the second reflective film is interposed between a first conductive film and a second conductive film, and the first conductive film and the second conductive film have the same stress distribution.

In this case, the light filter includes the fixed substrate and the movable portion. The first reflective film is disposed in the fixed substrate, and the second reflective film is disposed in the movable portion. The first reflective film and the second reflective film are arranged to face each other. The first reflective film and the second reflective film reflect a part of incident light and transmit a part of the incident light. Multiple reflection of light occurs between the first reflective film and the second reflective film, and light having a coincident phase is transmitted in a direction in which the incident light progresses, and progresses. The distance control unit controls the distance between the first reflective film and the second reflective film. Accordingly, the light filter is able to control a wavelength of light to be transmitted.

The conductive films are disposed by interposing the reflective film therebetween. It is possible to prevent a surface of the reflective film from being damaged by the conductive film. Accordingly, the light filter is able to be manufactured with high quality. Then, the conductive film has conductivity, and thus it is possible to suppress occurrence of static electricity in the surface of the conductive film. Accordingly, it is possible to control the distance between the first reflective film and the second reflective film with high accuracy.

The first conductive film and the second conductive film have the same stress distribution. Accordingly, a difference in internal stress between the first surface and the second surface of the reflective film rarely occurs, and thus it is possible to prevent the protrusion from appearing in the reflective film. As a result thereof, the light filter is able to transmit light having a predetermined wavelength with high accuracy for a long period of time.

### BRIEF DESCRIPTION OF THE DRAWINGS

The invention will be described with reference to the accompanying drawings, wherein like numbers reference like elements.

Figs. 1A and 1B are schematic perspective views illustrating a structure of an optical module according to a first embodiment.

Fig. 2A is a schematic plan view illustrating a structure of the optical module, and Figs. 2B and 2C are schematic side cross-sectional views illustrating a structure of the optical module.

Fig. 3A is a schematic side cross-sectional view illustrating a structure of a light filter, and Fig. 3B is a schematic cross-sectional view of a main part illustrating a structure of a reflective film.

Fig. 4A is a schematic plan view illustrating a structure of a movable substrate, and Fig. 4B is a schematic plan view illustrating a structure of a fixed substrate.

Fig. 5 is a block diagram of electric control of a control unit.

Figs. 6A to 6E are schematic views for describing a manufacturing method of an optical module.

Figs. 7A to 7D are schematic views for describing the manufacturing method of an optical module.

Figs. 8A to 8D are schematic views for describing the manufacturing method of an optical module.

Fig. 9A is a schematic plan view illustrating a structure of a movable substrate according to a second embodiment, and Fig. 9B is a schematic plan view illustrating a structure of a fixed substrate according to the second embodiment.

Fig. 10 is a block diagram of electric control of a control unit.

Fig. 11 is a schematic cross-sectional view of a main part illustrating a structure of a reflective film according to a third embodiment.

Fig. 12 is a block diagram illustrating a configuration of a color measuring device according to a fourth embodiment.

Fig. 13 is a schematic front view illustrating a configuration of a gas detecting device according to a fifth embodiment.

Fig. 14 is a block diagram illustrating a configuration of a control system of the gas detecting device.

Fig. 15 is a block diagram illustrating a configuration of a food analysis device according to a sixth embodiment.

Fig. 16 is a schematic perspective view illustrating a configuration of a spectroscopic camera according to a seventh embodiment.

### DESCRIPTION OF EXEMPLARY EMBODIMENTS

Hereinafter, embodiments will be described with reference to the drawings. Furthermore, each member in each drawing is enlarged to the extent of being recognizable in each drawing, and thus scale sizes of the respective members are different from each other.

### First Embodiment

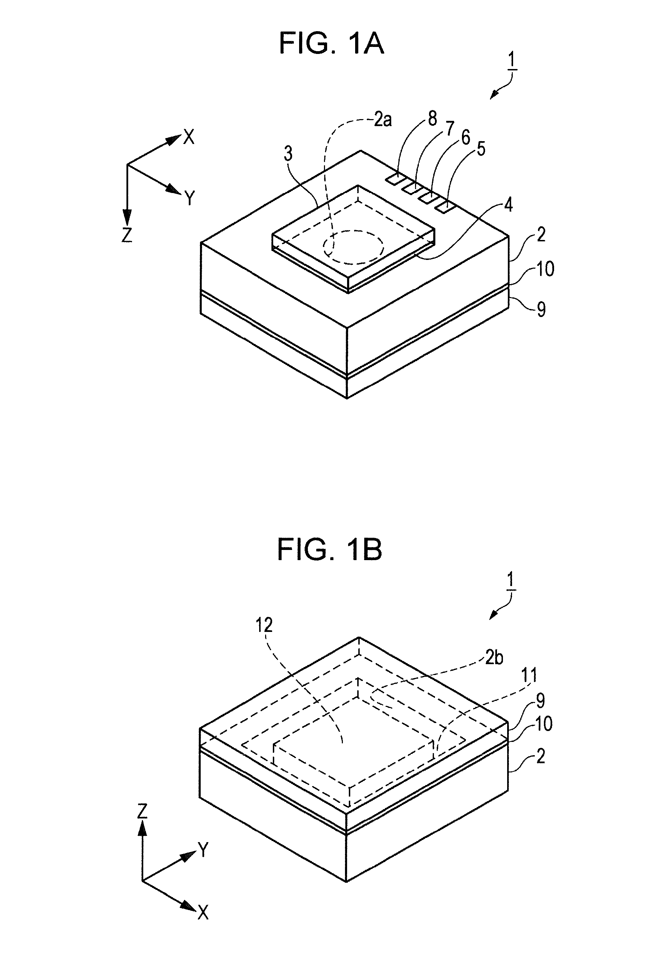

In this embodiment, an optical module having a characteristic structure and a manufacturing method of the optical module will be described with reference to the drawings. The optical module will be described with reference to Fig. 1A to Fig. 8D. Figs. 1A and 1B are schematic perspective views illustrating a structure of an optical module according to a first embodiment. Fig. 1A is a diagram viewed from a first lid side of the optical module, and Fig. 1B is a diagram viewed from a second lid side of the optical module. As illustrated in Fig. 1A, an optical module 1 is approximately in the shape of a rectangular parallelepiped. In the drawing, a down direction of the optical module 1 is a Z direction, and two directions orthogonal to the Z direction are an X direction and a Y direction. The X direction, the Y direction, and the Z direction are directions along sides of the optical module 1, and are orthogonal to each other.

The optical module 1 includes a housing 2 as a containing portion in the shape of a bottomed square cylinder, and a circular first hole 2a is formed in the housing 2 on a -Z direction side. Then, a first lid 3 as the containing portion is disposed to block the first hole 2a. The housing 2 and the first lid 3 are joined by a first low-melting-point glass 4. A first terminal 5, a second terminal 6, a third terminal 7, and a fourth terminal 8 are disposed in the housing 2 on the -Z direction side. A second lid 9 as the containing portion is disposed in the housing 2 on a Z direction side, and the housing 2 and the second lid 9 are joined by a second low-melting-point glass 10.

As illustrated in Fig. 1B, a square second hole 2b is formed in the housing 2 on the Z direction side. The second hole 2b is larger than the first hole 2a. Then, a second lid 9 is disposed to block the second hole 2b. An internal space 11 surrounded by the housing 2, the first lid 3, and the second lid 9 is a sealed space, and a light filter 12 is disposed in the internal space 11. In other words, the housing 2 includes the internal space 11, and the light filter 12 is contained in the internal space 11. The second lid 9 is connected to the housing 2, and thus seals the internal space 11. The containing portion is formed by the housing 2, the first lid 3, the second lid 9, and the like, and the light filter 12 is contained inside the containing portion.

A dimension of the optical module 1 is not particularly limited, and in this embodiment, for example, a thickness from the first lid 3 to the second lid 9 is approximately 3 mm. The housing 2 is in the shape of a square having a side of approximately 15 mm when viewed from the Z direction. A thickness of the second lid 9 is approximately 1 mm. The light filter 12 is in the shape of a square having a side of approximately 11 mm to 12 mm when viewed from the Z direction. A thickness of the light filter 12 is approximately 0.7 mm to 1.5 mm.

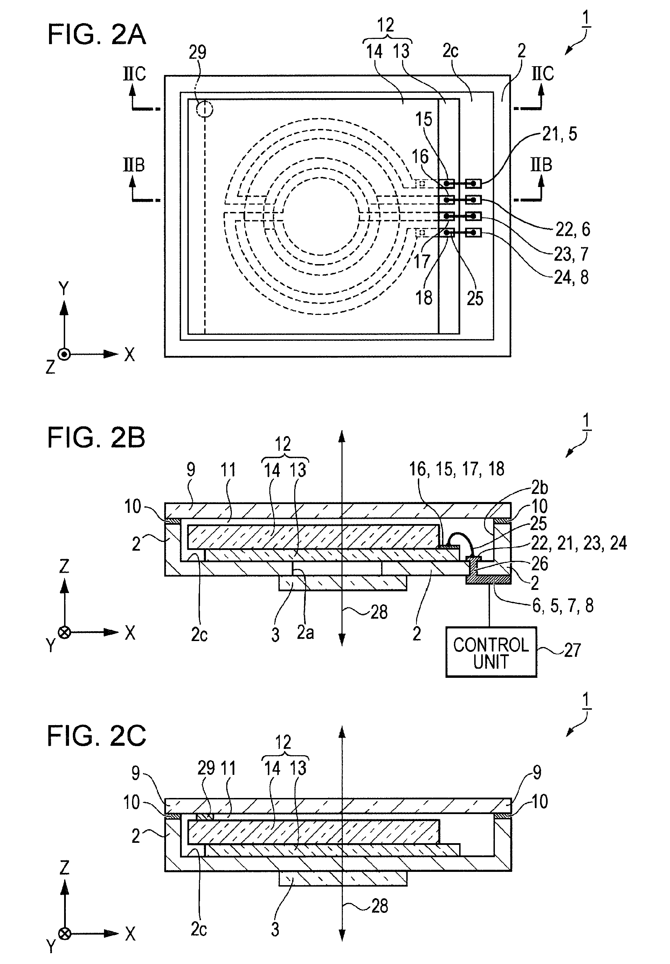

Fig. 2A is a schematic plan view illustrating a structure of the optical module, and is a diagram in which the optical module 1 is viewed from the Z direction side. Fig. 2A is a diagram excluding the second lid 9. Fig. 2B is a schematic side cross-sectional view illustrating a structure of the optical module, and is a diagram viewed from a cross-sectional surface cut along line IIB-IIB of Fig. 2A. As illustrated in Figs. 2A and 2B, the light filter 12 is disposed in a bottom surface 2c of the housing 2, and the light filter 12 has a structure in which a movable substrate 13 and a fixed substrate 14 overlap with each other.

A first terminal 15, a second terminal 16, a third terminal 17, and a fourth terminal 18 are disposed on a end of the movable substrate 13 on a +X direction side. A first terminal 21, a second terminal 22, a third terminal 23, and a fourth terminal 24 are disposed in the bottom surface 2c on the +X direction side. The first terminal 15 is connected to the first terminal 21 by gold wire 25, and the second terminal 16 is connected to the second terminal 22 by gold wire 25. Further, the third terminal 17 is connected to the third terminal 23 by gold wire 25, and the fourth terminal 18 is connected to the fourth terminal 24 by gold wire 25.

A through electrode 26 is disposed in the housing 2, and the first terminal 21 is connected to the first terminal 5 by the through electrode 26. Similarly, the second terminal 22 is connected to the second terminal 6 by the through electrode 26, and the third terminal 23 is connected to the third terminal 7 by the through electrode 26. Further, the fourth terminal 24 is connected to the fourth terminal 8 by the through electrode 26. That is, the first terminal 15 is connected to the first terminal 5, and the second terminal 16 is connected to the second terminal 6. Then, the third terminal 17 is connected to the third terminal 7, and the fourth terminal 18 is connected to the fourth terminal 8.

The first terminal 5 to the fourth terminal 8 are electrically connected to a control unit 27. The control unit 27 controls a voltage of the first terminal 15 to the fourth terminal 18 through the first terminal 5 to the fourth terminal 8, the through electrode 26, the first terminal 21 to the fourth terminal 24, and the gold wire 25.

The first lid 3 and the second lid 9 are formed of silicate glass having light permeability. The silicate glass is also used as a material of the movable substrate 13 and the fixed substrate 14. As the silicate glass, for example, various glasses such as soda glass, crystalline glass, quartz glass, lead glass, potassium glass, borosilicate glass, and alkali-free glass, crystal, and the like are able to be used. Accordingly, light 28 as incident light is able to pass through the first lid 3, the light filter 12, and the second lid 9. A material of the housing 2 is not particularly limited insofar as the material has a coefficient of linear expansion close to that of the first lid 3 and the second lid 9, and in this embodiment, for example, ceramic is used as the material of the housing 2.

Fig. 2C is a schematic side cross-sectional view illustrating a structure of the optical module, and is a diagram viewed from a cross-sectional surface cut along line IIC-IIC of Fig. 2A. As illustrated in Figs. 2A and 2C, a fixing portion 29 is disposed in the vicinity of a corner of the fixed substrate 14 on a -X direction side and a +Y direction side, and an upper surface of the fixed substrate 14 is fixed to the second lid 9 by the fixing portion 29. In the fixing portion 29, low-melting-point glass in which an additive agent is added to silicate glass is used. In this embodiment, for example, quartz glass is used in the second lid 9, the movable substrate 13, and the fixed substrate 14.

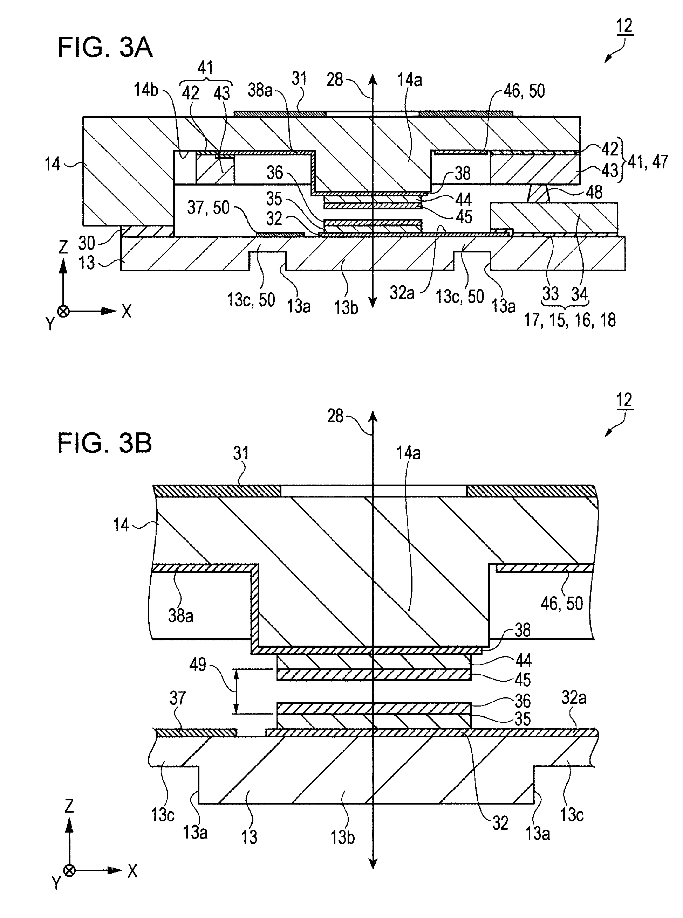

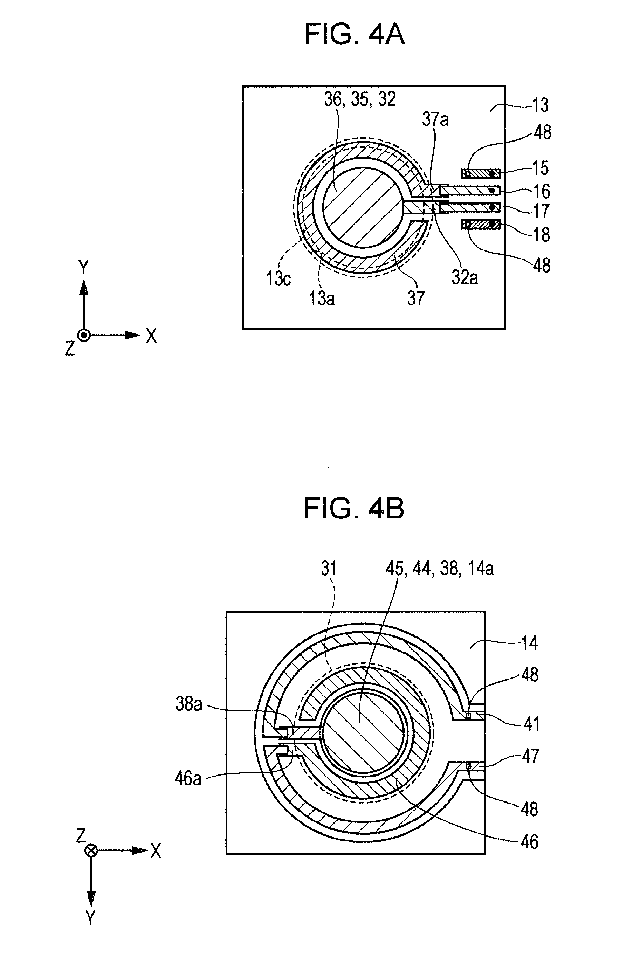

Fig. 3A is a schematic side cross-sectional view illustrating a structure of the light filter. Fig. 3B is a schematic cross-sectional view of a main part illustrating a structure of a reflective film. Fig. 4A is a schematic plan view illustrating a structure of the movable substrate, and Fig. 4B is a schematic plan view illustrating a structure of the fixed substrate. As illustrated in Figs. 3A and 3B, in the light filter 12, the movable substrate 13 and the fixed substrate 14 are joined by a joining film 30. In the joining film 30, for example, a film configured by a plasma polymerized film including siloxane as a main component, and the like is able to be used. An aperture 31 is disposed in a surface of the fixed substrate 14 on the Z direction side.

The aperture 31, for example, is a film of a non-translucent member such as Cr. The aperture 31 is in the shape of a circular ring, and an inner circumferential diameter of the aperture 31 is set to be an effective diameter of the light 28 which is interfered by the light filter 12. Accordingly, the aperture 31 is able to narrow the light 28 incident on the optical module 1 by limiting the light 28 within a predetermined range. When accuracy in a wavelength of the light 28 passing through the light filter 12 is obtained without including the aperture 31, the aperture 31 may be omitted.

As illustrated in Figs. 3A and 3B, and Fig. 4A, a circular ring-shaped groove 13a surrounding a center is disposed in the movable substrate 13 in a plan view seen from the Z direction. A columnar portion surrounded by the groove 13a is a movable portion 13b. The movable portion 13b is arranged to face the fixed substrate 14. A portion which is positioned around the movable portion 13b and becomes thin by the groove 13a is a retaining portion 13c. A thickness of the retaining portion 13c is thin, and thus is easily deformed. Accordingly, the movable portion 13b is able to be easily moved to the Z direction. The movable substrate 13, for example, is formed by processing a glass base material having a thickness of 200 µm to 800 µm. The thickness of the retaining portion 13c is not particularly limited, and in this embodiment, for example, is approximately 30 µm.

A conductive film 32 as a first conductive film is disposed in a surface of the movable portion 13b on a +Z direction side. As a material of the conductive film 32, a film having light permeability and a conductive property may be used, and Indium-gallium oxide (IGO), Indium Tin Oxide (ITO), indium-doped cerium oxide (ICO), and the like are able to be used. In this embodiment, for example, IGO is used as the material of the conductive film 32. IGO has excellent light permeability, and has permeability greater than or equal to approximately 80% in a visible region. Then, IGO has conductivity less than or equal to 10⁻³ ΩCm. Further, IGO has an amorphous structure, and thus is able to be easily formed in a predetermined shape by using an oxalic acid-based etching liquid. Thus, IGO is a material suitable for the conductive film 32.

Conductive film wiring 32a is disposed in the conductive film 32 on the +X direction side to extend in the +X direction. A material of the conductive film wiring 32a is identical to the material of the conductive film 32, and is disposed in a step identical to a step of disposing the conductive film 32. The first terminal 15 to the fourth terminal 18 are further disposed in a surface of the movable substrate 13 on the +Z direction side, and the conductive film wiring 32a is connected to the third terminal 17. A part of the third terminal 17 is disposed on the conductive film wiring 32a such that a part of the third terminal 17 and the conductive film wiring 32a overlap with each other.

The first terminal 15 to the fourth terminal 18 have a structure in which a metallic upper side layer 34 is laminated on a metallic base layer 33. As the metallic base layer 33, a Cr film, a TiW film, a NiCr alloy film, a film in which a Ni film is laminated on a Cr film, and the like are able to be used. When the metallic base layer 33 is formed of TiW, the metallic base layer 33 is formed by using a perchloric acid-based etching liquid. Then, when the metallic base layer is formed of Cr or NiCr, the metallic base layer 33 is formed by using a cerium nitrate-based etching liquid as an etching liquid. Accordingly, it is possible to perform patterning without damaging the conductive film 32. For example, in this embodiment, a Cr film is used in the metallic base layer 33. Then, it is preferable that the metallic upper side layer 34 is the metal having small resistance, and for example, in this embodiment, an Au film is used in the metallic upper side layer 34.

A movable reflective film 35 as a second reflective film is disposed on the conductive film 32 to overlap with the conductive film 32. The movable reflective film 35 is in the shape of a circular film when viewed from the Z direction, and a surface thereof is formed as a mirror. The movable reflective film 35 reflects a part of the incident light 28 and transmits a part of the incident light 28. As a material of the movable reflective film 35, a material having high reflectance of reflecting the light 28 is preferable, and in this embodiment, for example, silver or a silver alloy is used as the material of the movable reflective film 35. As a silver alloy, for example, a silver samarium copper alloy (AgSmCu), silver carbide (AgC), a silver palladium copper alloy (AgPdCu), a silver bismuth copper alloy (AgBiNd), a silver gallium copper alloy (AgGaCu), silver auride (AgAu), a silver indium tin alloy (AgInSn), and silver cupride (AgCu) are able to be used. The alloy such as AgSmCu and AgBiNd has high resistance particularly for sulfur, a halogen compound, and sodium, and thus it is possible to suppress degradation of reflectance in a manufacture step. In this embodiment, for example, AgSmCu is used in the movable reflective film 35.

The conductive film 32 is disposed between the movable reflective film 35 and the movable portion 13b. The conductive film 32 is formed of a material having an affinity with the movable reflective film 35 and the movable substrate 13. By disposing the conductive film 32, it is possible to dispose the movable reflective film 35 on the movable portion 13b with excellent adhesiveness compared to a case where the movable reflective film 35 is directly disposed on the movable portion 13b.

A protective film 36 as a second conductive film is disposed on the movable reflective film 35 to overlap with the movable reflective film 35. The protective film 36 protects the movable reflective film 35, and maintains reflectance of the movable reflective film 35. A material of the protective film 36 is identical to the material of the conductive film 32, and is a film having conductivity. In this embodiment, for example, IGO is used in the conductive film 32 and the protective film 36. IGO has high transmittance of the light 28, and thus is able to efficiently transmit the light 28. Further, IGO has low resistance, and thus is able to allow static electricity to flow through the third terminal 17 rapidly.

The conductive film 32 and the protective film 36 have the same thickness, and are in the same shape. It is preferable that a thickness of the conductive film 32 and the protective film 36 is approximately 5 nm to 20 nm. When the thickness excessively increases, the light 28 is attenuated, and when the thickness excessively decreases, a protection function is not able to be obtained. Then, the protective film 36 and the conductive film 32 are disposed by interposing the movable reflective film 35 therebetween, and the conductive film 32 and the protective film 36 are positioned in a place facing each other. When a temperature of the light filter 12 is changed, the protective film 36, the conductive film 32, and the movable reflective film 35 are expanded and contracted according to the temperature. Then, when there is a difference in internal stress between a surface on the conductive film 32 side and a surface on the protective film 36 side in the movable reflective film 35, a protrusion referred to as a "hillock" or a "whisker" appears. Accordingly, reflectance of the movable reflective film 35 decreases. In this embodiment, the protective film 36 and the conductive film 32 interposing the movable reflective film 35 therebetween are formed of the same material. Further, the conductive film 32 and the protective film 36 have the same thickness, and are in the same shape. Accordingly, the protective film 36 and the conductive film 32 interposing the movable reflective film 35 therebetween have the same coefficient of thermal expansion. Accordingly, a difference in internal stress between the surface on the conductive film 32 side and the surface on the protective film 36 side in the movable reflective film 35 rarely occurs, and thus it is possible to prevent the protrusion from appearing.

The protective film 36 is electrically connected to the third terminal 17 through the movable reflective film 35, the conductive film 32, and the conductive film wiring 32a. In the third terminal 17, an Au film is used in the metallic upper side layer 34. Accordingly, it is possible to decrease resistance of a current flowing through the third terminal 17. As a result thereof, even when static electricity occurs in the protective film 36, it is possible to eliminate static electricity rapidly.

A movable electrode 37 is disposed around the movable reflective film 35, and the movable electrode 37 surrounds the movable reflective film 35 in the shape of a circular ring. The movable electrode 37 is divided on the +X direction side of the circular ring, and the conductive film wiring 32a is disposed in the divided portion. The movable electrode 37 is connected to the second terminal 16 by an electrode wiring 37a. The second terminal 16 is connected to the second terminal 6 of the housing 2, and thus the movable electrode 37 is connected to the second terminal 6.

The movable electrode 37 and the electrode wiring 37a are a laminated film of an ITO film and an Au film. A part of the second terminal 16 is disposed on the electrode wiring 37a such that a part of the second terminal 16 and the electrode wiring 37a overlap with each other.

As illustrated in Figs. 3A and 3B, and Fig. 4B, a columnar reflective film disposed portion 14a is disposed in the center of the fixed substrate 14 in a plan view seen from the -Z direction to protrude in the -Z direction. An electrode disposed groove 14b which is concave in the shape of a circular ring is disposed around the reflective film disposed portion 14a. Further, the electrode disposed groove 14b extends in the +X direction side and extends to an outer circumference of the fixed substrate 14. Accordingly, in the fixed substrate 14, the electrode disposed groove 14b is opened on the +X direction side. The fixed substrate 14, for example, is formed by processing a glass base material having a thickness of 500 µm to 1000 µm.

A conductive film 38 as a first conductive film is disposed in a surface of the reflective film disposed portion 14a on the -Z direction side. As a material of the conductive film 38, a material identical to the material of the conductive film 32 is able to be used. As the material of the conductive film 38, IGO, ITO, ICO, and the like are able to be used. In this embodiment, for example, IGO is used as the material of the conductive film 38. For this reason, the conductive film 38 has high light transmittance and low resistance, and is able to be easily formed in a predetermined shape by using an oxalic acid-based etching liquid.

A conductive film wiring 38a extends in the -X direction on the -X direction side of the conductive film 38. A material of the conductive film wiring 38a is identical to the material of the conductive film 38, and is disposed in a step identical to a step of disposing the conductive film 38. A reflective film terminal 41 is further disposed in a surface of the fixed substrate 14 on the -Z direction side, and the conductive film wiring 38a is connected to the reflective film terminal 41. A part of the reflective film terminal 41 is disposed on the conductive film wiring 38a such that a part of the reflective film terminal 41 and the conductive film wiring 38a overlap with each other.

The reflective film terminal 41 has a structure in which a metallic upper side layer 43 is laminated on a metallic base layer 42 similar to the first terminal 15 to the fourth terminal 18. In the metallic base layer 42, a film formed of a material identical to the material of the metallic base layer 33 is used. Then, it is preferable that the metallic upper side layer 43 is the metal having small resistance, and a film identical to the film used in the metallic upper side layer 34 is used in the metallic upper side layer 43. The reflective film terminal 41 extends to the +X direction side through a -Y direction side of the conductive film 38 along a coaxial circle of the conductive film 38, and reaches a position facing the fourth terminal 18.

A fixed reflective film 44 as a first reflective film is disposed in a surface of the conductive film 38 on the -Z direction side. The fixed reflective film 44 is in the shape of a circular film when viewed from the -Z direction, and a surface thereof is formed as a mirror. As a material of the fixed reflective film 44, a material identical to the material of the movable reflective film 35 is used. The fixed reflective film 44 is positioned on a place facing the movable reflective film 35, and the fixed reflective film 44 reflects a part of the light 28 and transmits a part of the light 28.

The conductive film 38 is disposed between the fixed reflective film 44 and the fixed substrate 14. The conductive film 38 is formed of a material having an affinity with the fixed reflective film 44 and the fixed substrate 14. By disposing the conductive film 38, it is possible to dispose the fixed reflective film 44 on the fixed substrate 14 with excellent adhesiveness compared to a case where the fixed reflective film 44 is directly disposed on the fixed substrate 14.

A protective film 45 as a second conductive film is disposed on the fixed reflective film 44 to overlap with the fixed reflective film 44. The protective film 45 protects the fixed reflective film 44, and maintains reflectance of the fixed reflective film 44. A material of the protective film 45 is identical to the material of the conductive film 38, and is a film having conductivity. In this embodiment, for example, IGO is used in the conductive film 38 and the protective film 45. IGO has low resistance, and thus is able to flow static electricity through the reflective film terminal 41 rapidly.

Then, the conductive film 38 and the protective film 45 interposing the fixed reflective film 44 therebetween have the same coefficient of thermal expansion. The conductive film 38 and the protective film 45 have the same thickness, and are in the same shape. It is preferable that a thickness of the conductive film 38 and the protective film 45 is approximately 5 nm to 20 nm. When the thickness excessively increases, the light 28 is attenuated, and when the thickness excessively decreases, a protection function is not able to be obtained. Then, the conductive film 38 and the protective film 45 are disposed by interposing the fixed reflective film 44 therebetween, and the conductive film 38 and the protective film 45 are positioned in a place facing each other. Accordingly, a difference in internal stress between a surface on the conductive film 38 side and a surface on the protective film 45 side in the fixed reflective film 44 rarely occurs, and thus it is possible to prevent a protrusion referred to as a "hillock" or a "whisker" from appearing. Then, IGO has high transmittance of the light 28, and thus it is possible to efficiently transmit the light 28.

The protective film 45 is electrically connected to the reflective film terminal 41 through the fixed reflective film 44, the conductive film 38, and the conductive film wiring 38a. In the reflective film terminal 41, an Au film is used in the metallic upper side layer 43. Accordingly, it is possible to decrease resistance of a current flowing through the reflective film terminal 41. As a result thereof, even when static electricity occurs in the protective film 45, it is possible to eliminate static electricity rapidly.

A fixed electrode 46 is disposed around the fixed reflective film 44 in the electrode disposed groove 14b.

The fixed electrode 46 is positioned around the fixed reflective film 44, and surrounds the fixed reflective film 44 in the shape of a circular ring. The fixed electrode 46 is divided on the -X direction side of the circular ring, and the conductive film wiring 38a which is connected to the conductive film 38 is disposed in the divided portion. The fixed electrode 46 is connected to a fixed electrode terminal 47 by a fixed electrode wiring 46a. The fixed electrode terminal 47 extends to the +X direction side through the +Y direction side of the fixed electrode 46 along the coaxial circle of the conductive film 38, and reaches a position facing the first terminal 15.

A bump electrode 48 is disposed between the reflective film terminal 41 and the fourth terminal 18, and the reflective film terminal 41 is connected to the fourth terminal 18 by the bump electrode 48. The fourth terminal 18 is connected to the fourth terminal 8 of the housing 2, and thus the fixed reflective film 44 is connected to the fourth terminal 8. Similarly, the bump electrode 48 is disposed between the fixed electrode terminal 47 and the first terminal 15, and the fixed electrode terminal 47 is connected to the first terminal 15 by the bump electrode 48. The first terminal 15 is connected to the first terminal 5 of the housing 2, and thus the fixed electrode 46 is connected to the first terminal 5.

The movable electrode 37 and the fixed electrode 46 are disposed such that portions in the shape of a circular ring face each other. Then, the control unit 27 applies a predetermined voltage between the second terminal 6 and the first terminal 5. Accordingly, an electrostatic force occurs between the movable electrode 37 and the fixed electrode 46. The retaining portion 13c is bent by the electrostatic force, and thus a gap 49 between the reflective films which is a distance between the movable reflective film 35 and the fixed reflective film 44 is displaced. Accordingly, it is possible for the control unit 27 to set the gap 49 between the reflective films to a desired dimension. An electrostatic actuator 50 as a distance control unit is configured by the movable electrode 37, the fixed electrode 46, the retaining portion 13c, and the like.

The movable reflective film 35 and the fixed reflective film 44 reflect a part of the light 28 incident on the light filter 12 and transmit a part of the light 28. Multiple reflection occurs between the movable reflective film 35 and the fixed reflective film 44, and the light 28 having a coincident phase is transmitted in a direction in which the light 28 progresses, and progresses. The electrostatic actuator 50 controls the gap 49 between the reflective films, and thus the light filter 12 is able to transmit the light 28 having a predetermined wavelength.

The protective film 36 and the conductive film 32 are in the same shape in a plan view of the movable substrate 13 seen from the Z direction. The conductive film 32 and the protective film 36 interposing the movable reflective film 35 therebetween have the same stress distribution. Accordingly, a difference in internal stress between the surface on the conductive film 32 side and the surface on the protective film 36 side in the movable reflective film 35 rarely occurs, and thus it is possible to prevent the protrusion from appearing in a surface of the movable reflective film 35.

Similarly, the protective film 45 and the conductive film 38 are in the same shape in a plan view of the fixed substrate 14 seen from the Z direction. The conductive film 38 and the protective film 45 interposing the fixed reflective film 44 therebetween have the same stress distribution. Accordingly, a difference in internal stress between the surface on the conductive film 38 side and the surface on the protective film 45 side in the fixed reflective film 44 rarely occurs, and thus it is possible to prevent the protrusion from appearing in a surface of the fixed reflective film 44.

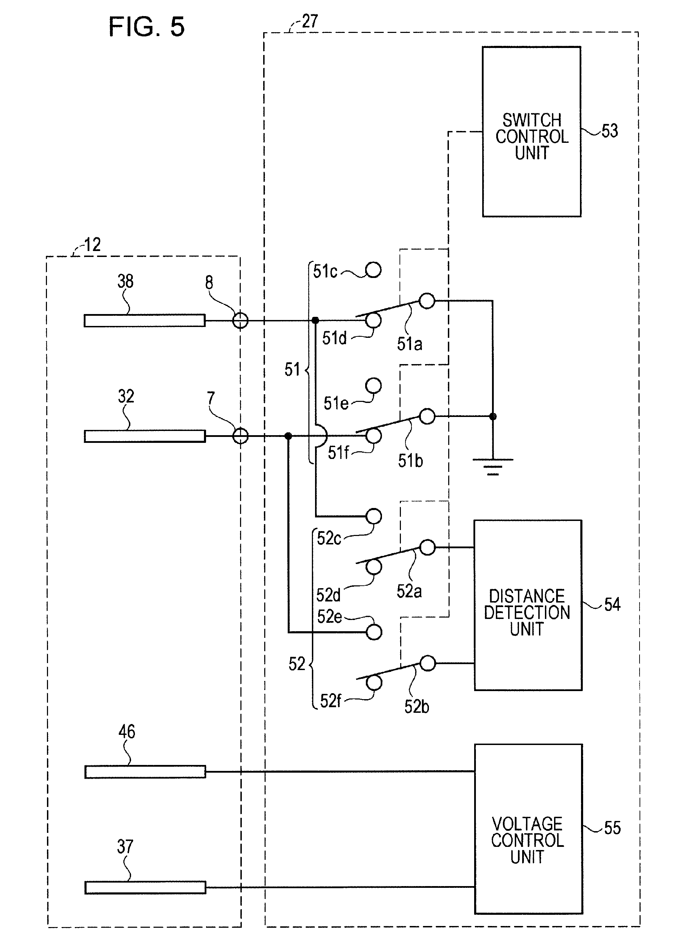

Fig. 5 is a block diagram of electric control of a control unit. As illustrated in Fig. 5, two switches of a first switch 51 and a second switch 52, and a switch control unit 53 controlling the first switch 51 and the second switch 52 are disposed in the control unit 27. Each of the switches is a two-circuit two-contact point switch. The first switch 51 includes a first movable segment 51a, a second movable segment 51b, a first contact point 51c, a second contact point 51d, a third contact point 51e, and a fourth contact point 51f.

The first movable segment 51a and the second movable segment 51b are commonly grounded. The first contact point 51c is a contact point which is isolated and is not connected. The second contact point 51d is connected to the conductive film 38 through the fourth terminal 8. The first movable segment 51a is conducted with any one of the first contact point 51c and the second contact point 51d. Similarly, the third contact point 51e is a contact point which is isolated and is not connected. The fourth contact point 51f is connected to the conductive film 32 through the third terminal 7. The second movable segment 51b is conducted with any one of the third contact point 51e and the fourth contact point 51f.

The first movable segment 51a and the second movable segment 51b are interlocked and are controlled by the switch control unit 53. When the switch control unit 53 conducts the first movable segment 51a with the first contact point 51c and conducts the second movable segment 51b with the third contact point 51e, in the first switch 51, the conductive film 38 is disconnected from the first movable segment 51a, and the conductive film 32 is disconnected from the second movable segment 51b. On the other hand, when the switch control unit 53 conducts the first movable segment 51a with the second contact point 51d and conducts the second movable segment 51b with the fourth contact point 51f, in the first switch 51, the conductive film 32 and the conductive film 38 are grounded. Accordingly, the switch control unit 53 is able to cause a short-circuit between the conductive film 32 and the conductive film 38, and is able to control whether to ground or open the conductive film 32 and the conductive film 38.

The second switch 52 includes a first movable segment 52a, a second movable segment 52b, a first contact point 52c, a second contact point 52d, a third contact point 52e, and a fourth contact point 52f. The first movable segment 52a and the second movable segment 52b are connected to a distance detection unit 54. The first contact point 52c is connected to the conductive film 38 through the fourth terminal 8. The second contact point 52d is a contact point which is isolated and is not connected. The first movable segment 52a is conducted with any one of the first contact point 52c and the second contact point 52d. Similarly, the third contact point 52e is connected to the conductive film 32 through the third terminal 7. The fourth contact point 52f is a contact point which is isolated and is not connected. The second movable segment 52b is conducted with any one of the third contact point 52e and the fourth contact point 52f. The distance detection unit 54 has a function of detecting a distance between the conductive film 32 and the conductive film 38 by measuring electric capacitance between the conductive film 32 and the conductive film 38.

The light filter 12 includes an external terminal of the third terminal 7 and the fourth terminal 8. Then, the distance detection unit 54 is able to detect the distance between the conductive film 32 and the conductive film 38 by using the external terminal of the third terminal 7 and the fourth terminal 8.

The first movable segment 52a and the second movable segment 52b are interlocked and are controlled by the switch control unit 53. When the switch control unit 53 conducts the first movable segment 52a with the first contact point 52c and conducts the second movable segment 52b with the third contact point 52e, in the second switch 52, the conductive film 32 and the conductive film 38 are connected to the distance detection unit 54. On the other hand, when the switch control unit 53 conducts the first movable segment 52a with the second contact point 52d and conducts the second movable segment 52b with the fourth contact point 52f, in the second switch 52, the conductive film 32 and the conductive film 38 are disconnected from the distance detection unit 54. Accordingly, the switch control unit 53 is able to control whether to connect or ground the conductive film 32 and the conductive film 38 to the distance detection unit 54.

When the control unit 27 detects the gap 49 between the reflective films, first, the switch control unit 53 switches the first switch 51 to the second switch 52. In the first switch 51, the switch control unit 53 brings the first movable segment 51a in contact with the first contact point 51c. Further, the switch control unit 53 brings the second movable segment 51b in contact with the third contact point 51e. Further, in the second switch 52, the switch control unit 53 brings the first movable segment 52a in contact with the first contact point 52c. Further, the switch control unit 53 brings the second movable segment 52b in contact with the third contact point 52e. Accordingly, the conductive film 32 and the conductive film 38 are respectively connected to the distance detection unit 54. Then, the distance detection unit 54 energizes the conductive film 32 and the conductive film 38 and measures electric capacitance between the conductive film 32 and the conductive film 38. Accordingly, the distance detection unit 54 detects the gap 49 between the reflective films.

When the distance detection unit 54 does not measure the gap 49 between the reflective films, in the first switch 51, the switch control unit 53 brings the first movable segment 51a in contact with the second contact point 51d. Further, the switch control unit 53 brings the second movable segment 51b in contact with the fourth contact point 51f. In the second switch 52, the switch control unit 53 brings the first movable segment 52a in contact with the second contact point 52d. Further, the switch control unit 53 brings the second movable segment 52b in contact with the fourth contact point 52f. Accordingly, the conductive film 32 and the conductive film 38 are respectively grounded and are conducted to each other.

Molecules such as water molecules or oxygen molecules move between the conductive film 32 and the conductive film 38, and the molecules collide with each other. At this time, static electricity occurs in each of the molecules. Then, when the molecules having static electricity are in contact with the conductive film 32 and the conductive film 38, the conductive film 32 and the conductive film 38 are electrostatically charged. When a difference in voltages between the conductive film 32 and the conductive film 38 occurs due to static electricity, an electrostatic force occurs between the conductive film 32 and the conductive film 38. Accordingly, the gap 49 between the reflective films varies, and thus a wavelength of light passing through the light filter 12 varies. Therefore, the switch control unit 53 grounds the conductive film 32 and the conductive film 38 at a predetermined time interval. Accordingly, static electricity of the conductive film 32 and the conductive film 38 is removed, and thus it is possible to control the gap 49 between the reflective films with high accuracy.

Furthermore, as the first switch 51 and the second switch 52, a switching element configured by a semiconductor such as a transistor may be used or an electromagnetic switch may be used. When a current is small, it is preferable that the switching element configured by the semiconductor is used in terms of easiness in manufacturing and durability. In this embodiment, for example, as the first switch 51 and the second switch 52, the switching element configured by the semiconductor is used.

A voltage control unit 55 is disposed in the control unit 27, and the movable electrode 37 and the fixed electrode 46 are electrically connected to the voltage control unit 55. The voltage control unit 55 is able to control the gap 49 between the reflective films by controlling a voltage applied to the movable electrode 37 and the fixed electrode 46. The voltage control unit 55 changes the gap 49 between the reflective films to a predetermined distance. Then, the light 28 is incident on the light filter 12. The light 28 is multiply reflected between the movable reflective film 35 and the fixed reflective film 44, and light having a wavelength according to a dimension of the gap 49 between the reflective films passes through the light filter 12. Accordingly, the voltage control unit 55 is able to control a wavelength of the light 28 passing through the light filter 12 by controlling the gap 49 between the reflective films.

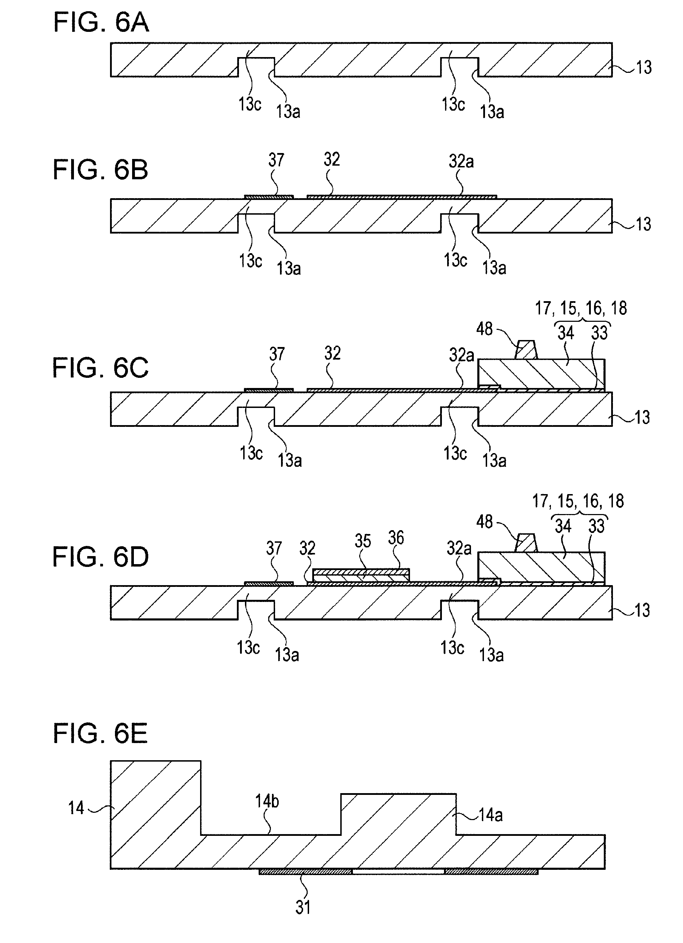

Next, a manufacturing method of the optical module 1 will be described. Fig. 6A to Fig. 8D are schematic views for describing a manufacturing method of an optical module. As illustrated in Fig. 6A, the movable substrate 13 in which the groove 13a and the retaining portion 13c are formed is prepared. The groove 13a and the retaining portion 13c are able to be formed by performing patterning using a known lithographic method and etching. For example, the groove 13a and the retaining portion 13c are able to be formed by patterning a layer formed of a chromium layer and a gold layer to form a mask, and by etching the layer using an ultrapure buffered hydrofluoric acid. For example, in this embodiment, a quartz substrate having a thickness of 0.5 mm is etched and the retaining portion 13c is formed to have a thickness of approximately 30 µm.

Next, as illustrated in Fig. 6B, the conductive film 32 and the movable electrode 37 are disposed on the movable substrate 13. First, a solid film in which ITO and Au which are the material of the movable electrode 37 are laminated on the movable substrate 13 is formed. The solid film indicates a film which is disposed on the entire substrate with a constant film thickness. Next, a solid film of an Au film is formed to overlap with the solid film of ITO. The solid film is able to be formed by using a film forming method such as a vapor-deposition method, and a sputtering method. Next, the solid film is patterned, and the movable electrode 37 and the electrode wiring 37a are formed. The movable electrode 37 and the electrode wiring 37a are able to be formed by patterning a mask using a known lithographic method and by etching the solid film.

Next, a solid film of IGO which is the material of the conductive film 32 is formed on the movable substrate 13. The solid film indicates a film which is disposed on the entire substrate with a constant film thickness. The solid film is able to be formed by using a film forming method such as a vapor-deposition method, and a sputtering method. Next, the solid film is patterned, and the conductive film 32 and the conductive film wiring 32a are formed. The conductive film 32 and the conductive film wiring 32a are able to be formed by patterning a mask using a known lithographic method and by etching the solid film. As an etching liquid of the IGO film, an oxalic acid-based etching liquid is able to be used. Furthermore, a sequence of disposing the conductive film 32 and the movable electrode 37 may be switched. Then, a step in which a protective film protecting a film which is disposed first is disposed, then a film is disposed, and then the protective film is removed may be included.

Next, as illustrated in Fig. 6C, the first terminal 15 to the fourth terminal 18, and the bump electrode 48 are formed on the movable substrate 13. First, a lower conductor solid film formed of Cr which is the material of the metallic base layer 33 is formed on the movable substrate 13. The lower conductor solid film indicates a solid film formed of a Cr material. Next, an upper conductor solid film formed of Au which is the material of the metallic upper side layer 34 is formed to overlap with the lower conductor solid film. The upper conductor solid film indicates a solid film formed of an Au material. The lower conductor solid film and the upper conductor solid film are able to be formed by using a film forming method such as a vapor-deposition method, and a sputtering method.

Next, a surface of the upper conductor solid film is patterned, and the bump electrode 48 is formed. Further, a remaining film of the upper conductor solid film is patterned, and the metallic upper side layer 34 of the first terminal 15 to the fourth terminal 18 is formed. Further, the lower conductor solid film is patterned, and the metallic base layer 33 of the first terminal 15 to the fourth terminal 18 is formed. The first terminal 15 to the fourth terminal 18, and the bump electrode 48 are able to be formed by patterning a mask using a known lithographic method and by etching a conductor solid film. An etching liquid of Au is not particularly limited, and as the etching liquid, for example, an iodine-based etching liquid is able to be used. When Cr or NiCr is used as the material of the metallic base layer 33, an etching liquid thereof is not particularly limited, and as the etching liquid, for example, a cerium nitrate-based etching liquid is able to be used. As the material of the metallic base layer 33, TiW may be used. At this time, an etching liquid thereof is not particularly limited, and as the etching liquid, for example, a perchloric acid-based etching liquid is able to be used.

The third terminal 17 is patterned such that a part of the third terminal 17 overlaps with the conductive film wiring 32a. Similarly, the second terminal 16 is patterned such that a part of the second terminal 16 overlaps with the electrode wiring 37a.

Next, as illustrated in Fig. 6D, the movable reflective film 35 and the protective film 36 are formed on the conductive film 32. First, a reflective solid film which is formed of the material of the movable reflective film 35 is formed on the conductive film 32. The reflective solid film, for example, is a solid film formed of AgSmCu. A protective solid film which is formed of the material of the protective film 36 is formed on the reflective solid film. The protective solid film is a solid film formed of IGO. A thickness of the protective solid film is identical to the thickness of the conductive film 32. The reflective solid film and the protective solid film are able to be formed by using a film forming method such as a vapor-deposition method, and a sputtering method. Next, the protective solid film is patterned, and the protective film 36 is formed. Subsequently, the reflective solid film is patterned, and the movable reflective film 35 is formed. At this time, the conductive film 32, the movable reflective film 35, and the protective film 36 are formed in the same shape. The protective film 36 and the movable reflective film 35 are able to be formed by patterning a mask using a known lithographic method and by etching the protective solid film and the reflective solid film. As an etching liquid of the IGO film, an oxalic acid-based etching liquid is able to be used. As an etching liquid of the reflective solid film, an etching liquid in which a phosphoric acid, a nitric acid, and an acetic acid are mixed is able to be used.

Next, as illustrated in Fig. 6E, the fixed substrate 14 in which the reflective film disposed portion 14a and the electrode disposed groove 14b are formed is prepared. The reflective film disposed portion 14a and the electrode disposed groove 14b are able to be formed by performing patterning using a known lithographic method and etching. For example, the reflective film disposed portion 14a and the electrode disposed groove 14b are able to be formed by patterning a layer formed of a chromium layer and a gold layer to form a mask, and by etching the layer using an ultrapure buffered hydrofluoric acid. For example, in this embodiment, a quartz substrate having a thickness of 1 mm is etched, and the reflective film disposed portion 14a and the electrode disposed groove 14b are formed. The aperture 31 is disposed in the fixed substrate 14. The aperture 31, first, is formed by forming a solid film of the material of the aperture 31. The solid film is formed by using a film forming method such as a vapor-deposition method, and a sputtering method. Next, the solid film is patterned, and the aperture 31 is formed. The aperture 31 is able to be formed by patterning a mask using a known lithographic method and by etching the solid film.

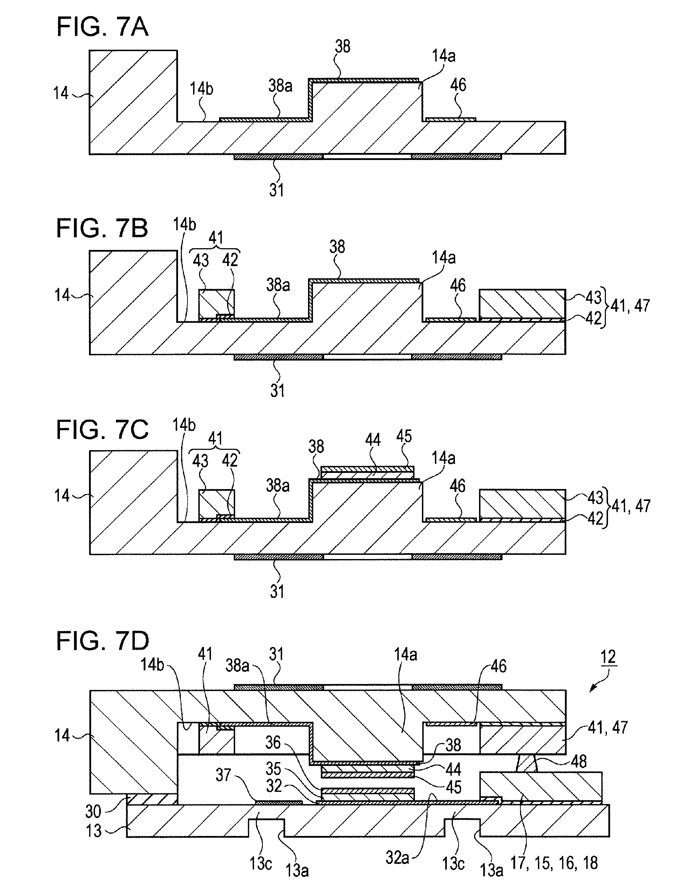

Next, as illustrated in Fig. 7A, the conductive film 38, the conductive film wiring 38a, the fixed electrode 46, and the fixed electrode wiring 46a are disposed on the fixed substrate 14. First, a solid film in which ITO and Au which are the material of the fixed electrode 46 are laminated on the fixed substrate 14 is formed. The solid film is able to be formed by using a film forming method such as a vapor-deposition method, and a sputtering method. Next, the solid film is patterned, and the fixed electrode 46 and the fixed electrode wiring 46a are formed. The fixed electrode 46 and the fixed electrode wiring 46a are able to be formed by patterning a mask using a known lithographic method and by etching the solid film.

Next, a solid film of IGO which is the material of the conductive film 38 is formed on the fixed substrate 14. The solid film is able to be formed by using a film forming method such as a vapor-deposition method, and a sputtering method. Next, the solid film is patterned, and the conductive film 38 and the conductive film wiring 38a are formed. The conductive film 38 and the conductive film wiring 38a are able to be formed by patterning a mask using a known lithographic method and by etching the solid film. As an etching liquid of the IGO film, an oxalic acid-based etching liquid is able to be used. Furthermore, a sequence of disposing the conductive film 38 and the fixed electrode 46 may be switched. Then, a step in which a protective film protecting a film which is disposed in first is disposed, then a film is disposed, and then the protective film is removed may be included.

Next, as illustrated in Fig. 7B, the reflective film terminal 41 and the fixed electrode terminal 47 are formed on the electrode disposed groove 14b. First, a lower conductor solid film formed of Cr which is the material of the metallic base layer 42 is formed on the electrode disposed groove 14b. The lower conductor solid film indicates a solid film formed of a Cr material. Next, an upper conductor solid film formed of Au which is the material of the metallic upper side layer 43 is formed to overlap with the lower conductor solid film. The upper conductor solid film indicates a solid film formed of an Au material. The lower conductor solid film and the upper conductor solid film are able to be formed by using a film forming method such as a vapor-deposition method, and a sputtering method.

Next, a surface of the upper conductor solid film is patterned, and the metallic upper side layer 43 of the reflective film terminal 41 and the fixed electrode terminal 47 is formed. Further, the lower conductor solid film is patterned, and the metallic base layer 42 of the reflective film terminal 41 and the fixed electrode terminal 47 is formed. The reflective film terminal 41 and the fixed electrode terminal 47 are able to be formed by patterning a mask using a known lithographic method and by etching the conductor solid film. An etching liquid of Au is not particularly limited, and as the etching liquid, for example, an iodine-based etching liquid is able to be used. When Cr or NiCr is used as the material of the metallic base layer 42, an etching liquid thereof is not particularly limited, and as the etching liquid, for example, a cerium nitrate-based etching liquid is able to be used.

The reflective film terminal 41 is patterned such that a part of the reflective film terminal 41 overlaps with the conductive film wiring 38a. Similarly, the fixed electrode terminal 47 is patterned such that a part of the fixed electrode terminal 47 overlaps with the fixed electrode wiring 46a.

Next, as illustrated in Fig. 7C, the fixed reflective film 44 and the protective film 45 are disposed on the conductive film 38. First, a reflective solid film which is formed of the material of the fixed reflective film 44 is formed on the conductive film 38. The reflective solid film, for example, is a solid film formed of AgSmCu. A protective solid film which is formed of the material of the protective film 45 is formed on the reflective solid film. A thickness of the protective solid film is identical to that thickness of the conductive film 38. The protective solid film is a solid film formed of IGO. The reflective solid film and the protective solid film are able to be formed by using a film forming method such as a vapor-deposition method, and a sputtering method. Next, the protective solid film is patterned, and the protective film 45 is formed. Subsequently, the reflective solid film is patterned, and the fixed reflective film 44 is formed. At this time, the conductive film 38, the fixed reflective film 44, and the protective film 45 are formed in the same shape. The protective film 45 and the fixed reflective film 44 are able to be formed by patterning a mask using a known lithographic method and by etching the reflective solid film. As an etching liquid of the IGO film which is the protective solid film, an oxalic acid-based etching liquid is able to be used. As an etching liquid of the reflective solid film, an etching liquid in which a phosphoric acid, a nitric acid, and an acetic acid are mixed is able to be used.

As the material of the conductive film 32, the conductive film 38, the protective film 36, and the protective film 45, IGO is used. When ITO is used as the material of the conductive film 32, the conductive film 38, the protective film 36, and the protective film 45, ITO is a crystalline film, and a royal water-based etching liquid should be used for patterning ITO. The royal water-based etching liquid may damage the wiring, the element, or the like. As an etching liquid used for patterning IGO, for example, an oxalic acid-based etching liquid is able to be used. The etching liquid for IGO is a solution by which the wiring, the element, or the like is rarely damaged compared to the royal water-based etching liquid. Accordingly, it is possible to manufacture the light filter 12 with high quality.

Next, as illustrated in Fig. 7D, the movable substrate 13 and the fixed substrate 14 are joined. A plasma polymerized film including siloxane as a main component is formed in each of the movable substrate 13 and the fixed substrate 14. Next, the movable substrate 13 and the fixed substrate 14 are joined by bonding the plasma polymerized film. The bonded plasma polymerized film is the joining film 30. The bump electrode 48 connects the reflective film terminal 41 and the fourth terminal 18, and connects the fixed electrode terminal 47 and the first terminal 15. According to the above steps, the light filter 12 is completed.

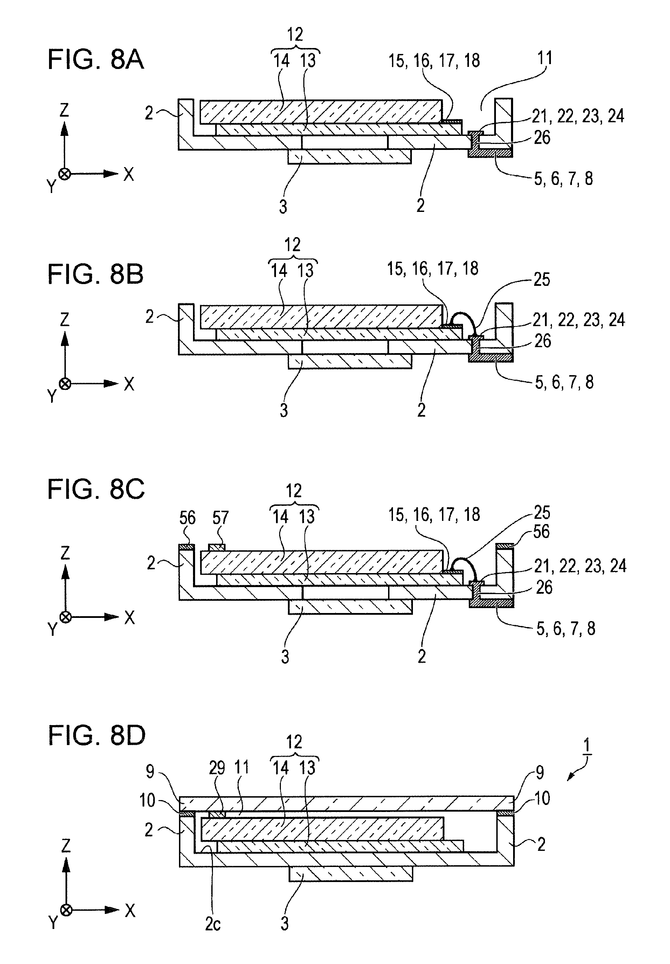

Subsequently, the light filter 12 is sealed by the housing 2 and the second lid 9. As illustrated in Fig. 8A, first, the housing 2 and the light filter 12 are prepared. The first lid 3, the first terminal 5 to the fourth terminal 8, the through electrode 26, the first terminal 21 to the fourth terminal 24, and the like are disposed in the housing 2. Furthermore, the housing 2 is able to be manufactured by using a known method, and the description thereof will be omitted.

Next, the light filter 12 is arranged in the internal space 11 in the housing 2, and a positional relationship between the housing 2 and the light filter 12 is fixed by using a fixing tool (not illustrated).

As illustrated in Fig. 8B, next, the first terminal 15 and the first terminal 21 are connected by the gold wire 25, and the second terminal 16 and the second terminal 22 are connected by the gold wire 25. Further, the third terminal 17 and the third terminal 23 are connected by the gold wire 25, and the fourth terminal 18 and the fourth terminal 24 are connected by the gold wire 25. The gold wire 25 is connected by using a wire bonding method. The gold wire 25 is disposed, and then the fixing tool is removed.

As illustrated in Fig. 8C, next, a low-melting-point glass paste 56 is arranged in a surface in which the second lid 9 of the housing 2 is planned to be disposed. A low-melting-point glass paste 57 is arranged in a place on the fixed substrate 14 in which the fixing portion 29 is planned to be disposed. Subsequently, the low-melting-point glass paste 56 and the low-melting-point glass paste 57 are heated, and a binder component is evaporated and removed.

As illustrated in Fig. 8D, next, the second lid 9 is arranged on the housing 2, and is heated in an environment which is set to a vacuum atmosphere by a vacuum chamber device or the like. The low-melting-point glass paste 56 and the low-melting-point glass paste 57 are melted, and then are slowly cooled. Accordingly, the low-melting-point glass paste 56 is the second low-melting-point glass 10, and the low-melting-point glass paste 57 is the fixing portion 29. Then, the optical module 1 is sealed in a state where the internal space 11 is decompressed. According to the above steps, the optical module 1 is completed.

As described above, according to this embodiment, the following effects are obtained.

(1) According to this embodiment, the conductive film 38 is disposed between the fixed reflective film 44 and the fixed substrate 14. By disposing the conductive film 38, it is possible to dispose fixed reflective film 44 on the fixed substrate 14 with excellent adhesiveness compared to a case where the fixed reflective film 44 is directly disposed on the fixed substrate 14. Similarly, the conductive film 32 is disposed between the movable reflective film 35 and the movable portion 13b. By disposing the conductive film 32, it is possible to dispose the movable reflective film 35 on the movable portion 13b with excellent adhesiveness compared to a case where the movable reflective film 35 is directly disposed on the movable portion 13b.

(2) According to this embodiment, the conductive film 32 and the protective film 36 are disposed by interposing the movable reflective film 35 therebetween. It is possible to prevent the surface of the movable reflective film 35 from being damaged by the protective film 36. Similarly, the conductive film 38 and the protective film 45 are disposed by interposing the fixed reflective film 44 therebetween. It is possible to prevent the surface of the fixed reflective film 44 from being damaged by the protective film 45. Accordingly, it is possible to manufacture the light filter 12 with high quality. Then, the protective film 36 and the protective film 45 have conductivity, and thus it is possible to suppress occurrence of static electricity in the surface of the protective film 36 and the protective film 45. Accordingly, it is possible to control the gap 49 between the reflective films with high accuracy.

(3) According to this embodiment, the conductive film 32 and the protective film 36 of the movable substrate 13 are formed of the same material, and have the same film thickness. When the protective film 36 is disposed in one surface of the movable reflective film 35, and the conductive film 32 is disposed in the other surface of the movable reflective film 35, the movable reflective film 35 has a stress distribution which is different between both surfaces. Then, at this time, when there is a difference in internal stress between the both surfaces of the movable reflective film 35, a protrusion referred to as a "hillock" or a "whisker" appears. Accordingly, reflectance of the movable reflective film 35 decreases. In this embodiment, the conductive film 32 and the protective film 36 interposing the movable reflective film 35 therebetween are formed of the same material, and have the same film thickness. Accordingly, a difference in internal stress between the both surfaces of the movable reflective film 35 rarely occurs, and thus it is possible to prevent the protrusion from appearing. As a result thereof, the light filter 12 is able to transmit the light 28 having a predetermined wavelength with high accuracy for a long period of time.

In this embodiment, the conductive film 38 and the protective film 45 interposing the fixed reflective film 44 therebetween are formed of the same material, and have the same film thickness. Accordingly, a difference in internal stress between the both surfaces of the fixed reflective film 44 rarely occurs, and thus it is possible to prevent the protrusion from appearing. As a result thereof, the light filter 12 is able to transmit the light 28 having a predetermined wavelength with high accuracy for a long period of time.

(4) According to this embodiment, the conductive film 32 and the protective film 36 of the movable substrate 13 are in the same shape. Accordingly, the conductive film 32 and the protective film 36 interposing the movable reflective film 35 therebetween have approximately the same stress distribution. Accordingly, a difference in internal stress between the both surfaces of the movable reflective film 35 rarely occurs, and thus it is possible to prevent the protrusion from appearing. Similarly, the conductive film 38 and the protective film 45 of the fixed substrate 14 are in the same shape. Accordingly, the conductive film 38 and the protective film 45 interposing the fixed reflective film 44 therebetween have approximately the same stress distribution. Accordingly, a difference in internal stress between the both surfaces of the fixed reflective film 44 rarely occurs, and thus it is possible to prevent the protrusion from appearing.

(5) According to this embodiment, the material of the conductive film 32, the protective film 36, the conductive film 38, and the protective film 45 include IGO. IGO has high light transmittance, and has transmittance greater than or equal to approximately 80% in a visible region. Accordingly, it is possible to efficiently transmit the light 28 having a predetermined wavelength.

(6) According to this embodiment, the third terminal 17 connected to the movable reflective film 35, and the fourth terminal 18 connected to the fixed reflective film 44 are disposed. Accordingly, the distance detection unit 54 is able to detect electric capacitance between the movable reflective film 35 and the fixed reflective film 44 through the third terminal 17 and the fourth terminal 18. Then, electric capacitance has a correlation with the gap 49 between the reflective films. Accordingly, the distance detection unit 54 is able to detect the gap 49 between the reflective films.

(7) According to this embodiment, the light filter 12 is contained in the containing portion, and is protected with the containing portion. Accordingly, it is possible to prevent the light filter 12 from being damaged at the time of grasping the optical module 1. Then, in the light filter 12, a protrusion is prevented from appearing in the movable reflective film 35 and the fixed reflective film 44. Accordingly, the optical module 1 is able to efficiently transmit the light 28 having a predetermined wavelength.

(8) According to this embodiment, the material of the third terminal 17 and the reflective film terminal 41 is metal. Accordingly, it is possible to decrease resistance of a current flowing through the third terminal 17 and the reflective film terminal 41. As a result thereof, even when static electricity occurs in the movable reflective film 35 and the fixed reflective film 44, it is possible to eliminate static electricity rapidly.

(9) According to this embodiment, the first switch 51 is able to connect the movable reflective film 35 and the fixed reflective film 44. Accordingly, a voltage difference due to static electricity of the movable reflective film 35 and the fixed reflective film 44 is eliminated. Accordingly, the optical module 1 is able to transmit light having a predetermined wavelength with high quality by controlling the gap 49 between the reflective films with high quality.

(10) According to this embodiment, the material of the conductive film wiring 38a is IGO, and in general, when the metallic base layer 42 is etched, the conductive film wiring 38a may be damaged. In contrast, in this embodiment, as the material of the metallic base layer 42, any one of TiW, Cr, and NiCr is used. When the metallic base layer 42 is formed of TiW, a perchloric acid-based etching liquid is used. Then, when the metallic base layer 42 is formed of Cr or NiCr, as an etching liquid thereof, a cerium nitrate-based etching liquid is used. IGO is rarely damaged by the perchloric acid-based etching liquid and the cerium nitrate-based etching liquid, and thus it is possible to pattern the metallic base layer 42 without damaging the conductive film wiring 38a.

Similarly, the material of the conductive film wiring 32a is IGO, and the material of the metallic base layer 33 is any one of TiW, Cr, and NiCr. When the metallic base layer 33 is formed of TiW, a perchloric acid-based etching liquid is used. Then, when the metallic base layer 33 is etched, the conductive film wiring 32a may be damaged. Then, when the metallic base layer 33 is formed of Cr or NiCr, as an etching liquid thereof, a cerium nitrate-based etching liquid is used. IGO is rarely damaged by the perchloric acid-based etching liquid and the cerium nitrate-based etching liquid, and thus it is possible to pattern the metallic base layer 33 without damaging the conductive film wiring 32a.

(11) According to this embodiment, the first terminal 15 to the fourth terminal 18 are disposed on the movable substrate 13, and then the movable reflective film 35 is disposed. The first terminal 15 to the fourth terminal 18 are able to be disposed after disposing the movable reflective film 35. At this time, in a step of disposing the first terminal 15 to the fourth terminal 18, the movable reflective film 35 may be damaged. In contrast, in this embodiment, in a step of disposing the first terminal 15 to the fourth terminal 18, there is no possibility of damaging the movable reflective film 35.

Similarly, reflective film terminal 41 and the fixed electrode terminal 47 are disposed on the fixed substrate 14, and then the fixed reflective film 44 and the protective film 45 are disposed. Accordingly, in a step of disposing the reflective film terminal 41 and the fixed electrode terminal 47, there is no possibility of damaging the fixed reflective film 44. Accordingly, it is possible to dispose the movable reflective film 35 and the fixed reflective film 44 with high quality.

### Second Embodiment

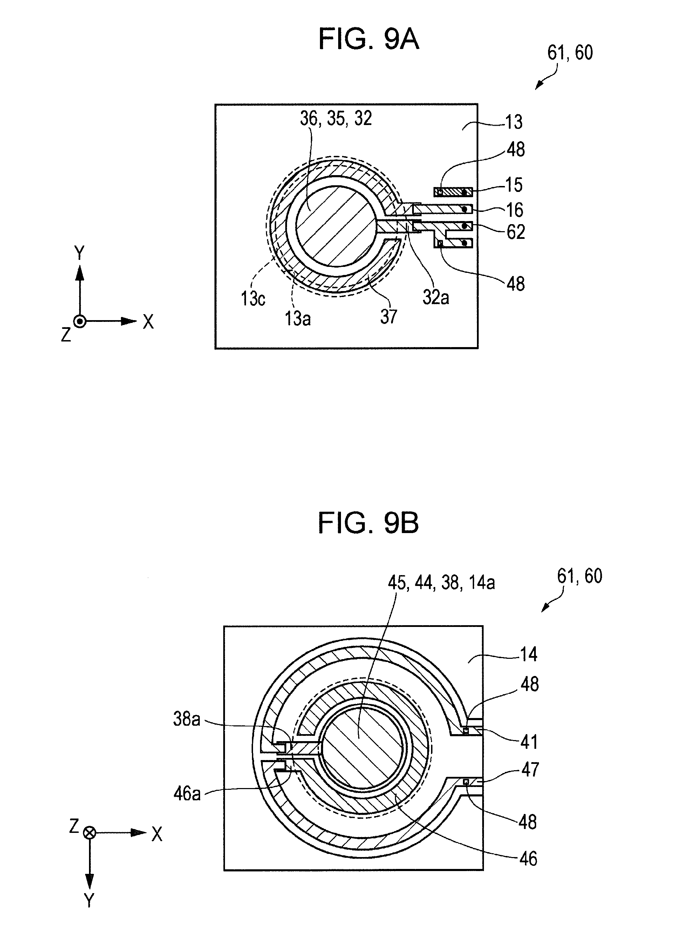

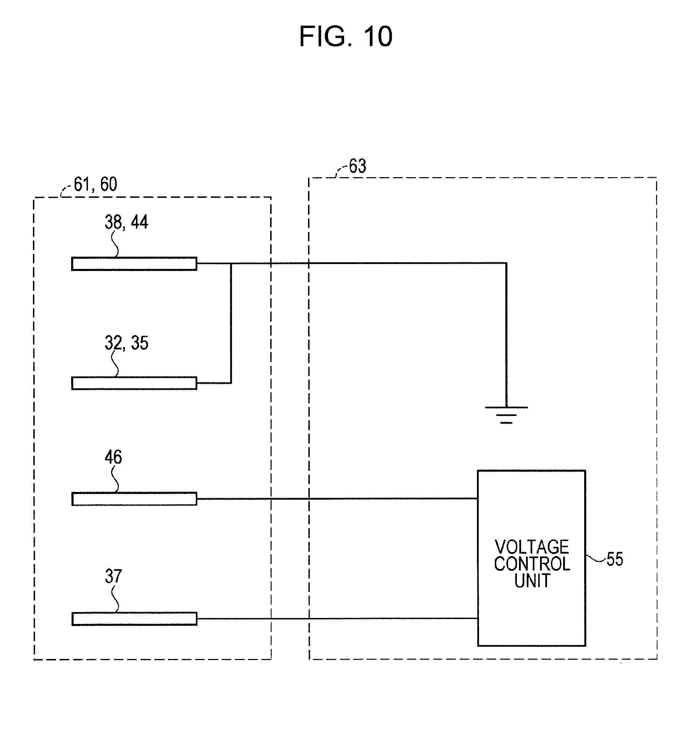

Next, one embodiment of the optical module will be described with reference to Figs. 9A and 9B and Fig. 10. Fig. 9A is a schematic plan view illustrating a structure of a movable substrate, and Fig. 9B is a schematic plan view illustrating a structure of a fixed substrate. Fig. 10 is a block diagram of electric control of a control unit. This embodiment is different from the first embodiment in that the movable reflective film 35 and the fixed reflective film 44 are electrically connected to each other in the light filter. Furthermore, the description of the same configuration as that of the first embodiment will be omitted.

That is, in this embodiment, as illustrated in Figs. 9A and 9B, an optical module 60 includes a light filter 61, and in the light filter 61, the movable substrate 13 and the fixed substrate 14 are joined by the joining film 30. The conductive film 32 is disposed on the movable substrate 13, and the movable reflective film 35 and the protective film 36 are disposed to overlap with the conductive film 32. A third terminal 62 is disposed in the conductive film 32 on the +X direction side. Then, the conductive film 32 and the third terminal 62 are connected by the conductive film wiring 32a.

The conductive film 38 is disposed on the fixed substrate 14, and the fixed reflective film 44 and the protective film 45 are disposed to overlap with the conductive film 38. The reflective film terminal 41 is disposed on the fixed substrate 14, and the reflective film terminal 41 and the conductive film 38 are connected by the conductive film wiring 38a. Then, the reflective film terminal 41 and the third terminal 62 are connected by the bump electrode 48. Accordingly, the movable reflective film 35 and the fixed reflective film 44 are electrically connected to each other.

Accordingly, voltages of the movable reflective film 35 and the fixed reflective film 44 have the same electric potential all the time, and thus even when static electricity occurs in the movable reflective film 35 and the fixed reflective film 44, a voltage difference is eliminated at once. Then, an electrostatic force does not act between the movable reflective film 35 and the fixed reflective film 44. Accordingly, the optical module 60 is able to transmit light having a predetermined wavelength with high quality by controlling the gap 49 between the reflective films with high quality.

As illustrated in Fig. 10, the conductive film 32 and the conductive film 38 are electrically connected to a control unit 63 driving the optical module 60. Then, in the control unit 63, the conductive film 32 and the conductive film 38 are grounded. Accordingly, even when static electricity is accumulated in the conductive film 32 and the conductive film 38, it is possible to eliminate static electricity.

As described above, according to this embodiment, the following effects are obtained.

(1) According to this embodiment, the movable reflective film 35 and the fixed reflective film 44 are electrically connected to each other. Accordingly, it is possible to prevent an electrostatic force from acting between the movable reflective film 35 and the fixed reflective film 44. Accordingly, it is possible to control the gap 49 between the reflective films with high accuracy.

(2) According to this embodiment, the movable reflective film 35 and the fixed reflective film 44 are electrically connected to each other in the light filter 61. Accordingly, a switch which is switched to be grounded to the control unit 63 is not necessary. Accordingly, it is possible to easily manufacture the control unit 63.

### Third Embodiment

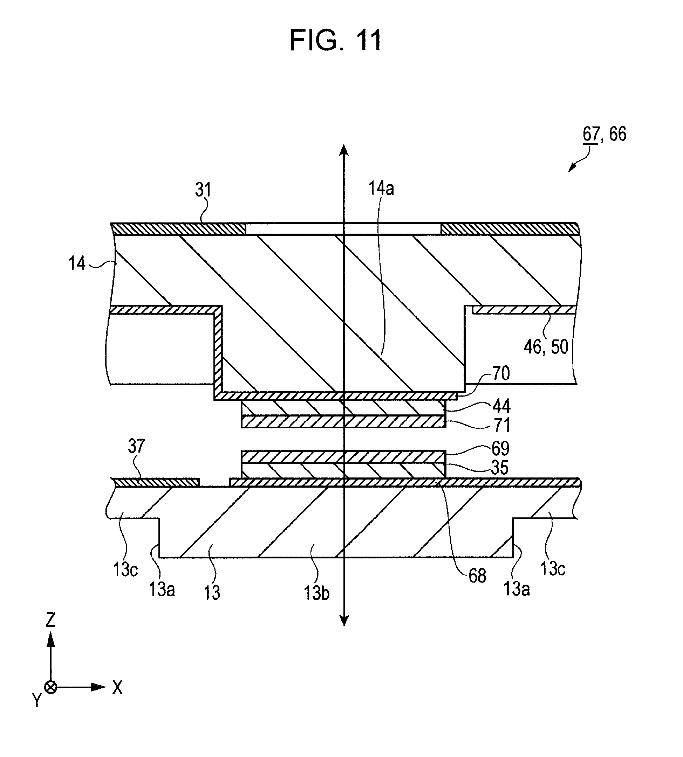

Next, one embodiment of the optical module will be described with reference to Fig. 11. Fig. 11 is a schematic cross-sectional view of a main part illustrating a structure of a reflective film. This embodiment is different from the first embodiment in that the materials of the conduct film and the protective film are different from each other. Furthermore, the description of the same configuration as that of the first embodiment will be omitted.

That is, in this embodiment, as illustrated in Fig. 11, an optical module 66 includes a light filter 67, and in the light filter 67, the movable substrate 13 and the fixed substrate 14 are joined by the joining film 30. A conductive film 68 is disposed on the movable substrate 13, and the movable reflective film 35 and a protective film 69 are disposed to overlap with the conductive film 68. A conductive film 70 is disposed on the fixed substrate 14, and the fixed reflective film 44 and a protective film 71 are disposed to overlap with the conductive film 70.

As a material of the conductive film 68, the protective film 69, the conductive film 70, and the protective film 71, a transparent conductive film of tin oxide (SnO₂) which is tin-based oxide, Al-doped zinc oxide (AZO) which is zinc-based oxide, indium zinc oxide (IZO: registered trademark) formed of Ga-doped zinc oxide (GZO), zinc oxide (ZnO), indium-based oxide, and zinc-based oxide, and the like in addition to IGO, ITO, and ICO are used.

The conductive film 68 and the protective film 69 are films formed of materials different from each other. Then, the conductive film 68 and the protective film 69 are expanded and contracted according to a variation of heat. At this time, a film thickness of the conductive film 68 and a film thickness of the protective film 69 are set such that a stress distribution of the conductive film 68 and a stress distribution of the protective film 69 are identical to each other. Accordingly, in the movable reflective film 35, stress of a surface on the conductive film 68 side and stress of a surface on the protective film 69 side are approximately identical to each other. Accordingly, it is possible to prevent a protrusion referred to as a "hillock" or a "whisker" from appearing in the movable reflective film 35.

Similarly, the conductive film 70 and the protective film 71 are films formed of materials different from each other. Then, the conductive film 70 and the protective film 71 are expanded and contracted according to a variation of heat. At this time, a film thickness of the conductive film 70 and a film thickness of the protective film 71 are set such that a stress distribution of the conductive film 70 and a stress distribution of the protective film 71 are identical to each other. Accordingly, in the fixed reflective film 44, stress of a surface on the conductive film 70 side and stress of a surface on the protective film 71 side are approximately identical to each other. Accordingly, it is possible to prevent a protrusion referred to as a "hillock" or a "whisker" from appearing in the fixed reflective film 44. As a result thereof, the light filter 67 is able to transmit light having a predetermined wavelength with high accuracy for a long period of time.

### Fourth Embodiment

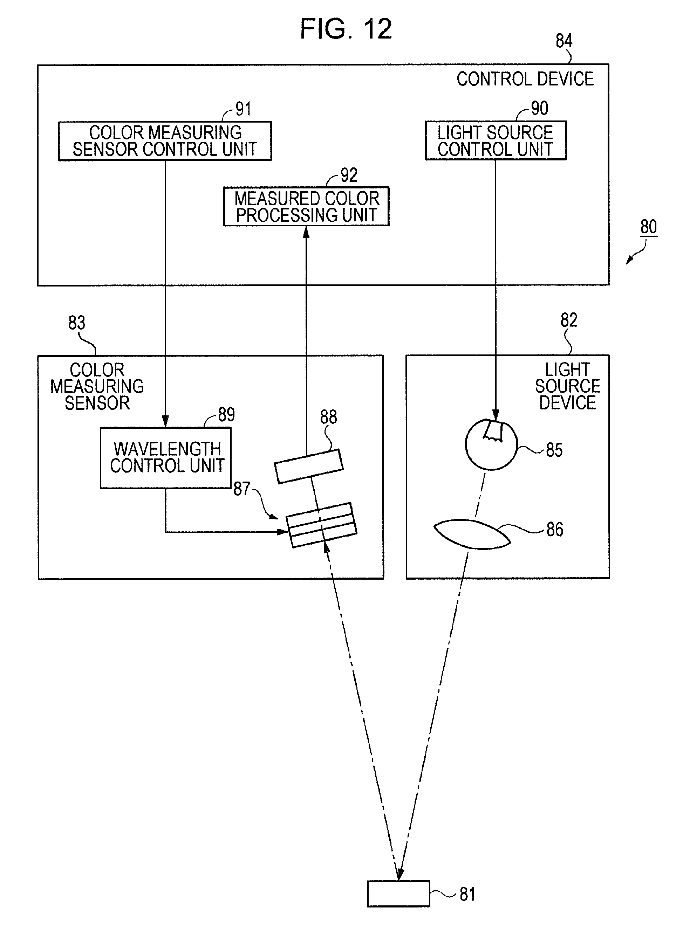

Next, one embodiment of a color measuring device including the optical module 1 described above will be described with reference to Fig. 12. Furthermore, the description of the same configuration as that of the embodiment described above will be omitted.

### Color Measuring Device

Fig. 12 is a block diagram illustrating a configuration of a color measuring device. As illustrated in Fig. 12, a color measuring device 80 as an electronic device includes a light source device 82 emitting light to a measurement object 81, a color measuring sensor 83, and a control device 84 controlling a whole operation of the color measuring device 80. Then, the color measuring device 80 reflects light emitted from the light source device 82 by the measurement object 81. Light to be inspected which is reflected is received by the color measuring sensor 83. The color measuring device 80 analyzes and measures chromaticity of the light to be inspected, that is, a color of the measurement object 81 on the basis of a detection signal output from the color measuring sensor 83.

The light source device 82 includes a light source 85 and a plurality of lenses 86 (in the drawing, only one lens is illustrated), and for example, base light such as white light is emitted to the measurement object 81. In addition, a collimator lens may be included in the plurality of lenses 86. In this case, the base light emitted from the light source 85 becomes parallel light by the collimator lens, and the light source device 82 emits the light toward the measurement object 81 from a projection lens (not illustrated). Furthermore, in this embodiment, the color measuring device 80 including light source device 82 is exemplified, and for example, when the measurement object 81 is a light emitting member such as a liquid crystal panel, the light source device 82 may not be disposed.

The color measuring sensor 83 includes a light filter 87, a detector 88 receiving light transmitted by the light filter 87, and a wavelength control unit 89 controlling a wavelength of the light transmitted by the light filter 87 as a control unit. In the light filter 87, any one of the optical module 1, the optical module 60, and the optical module 66 described above is used. The wavelength control unit 89 has a function of the control unit 27 in the first embodiment or the control unit 63 in the second embodiment.

In addition, the color measuring sensor 83 includes an incident optical lens (not illustrated) in a place facing the light filter 87. The incident optical lens guides reflected light (light to be inspected) which is reflected by the measurement object 81 to an inner portion of the color measuring sensor 83. Then, in the color measuring sensor 83, light having a predetermined wavelength among the lights to be inspected incident from the incident optical lens is dispersed by the light filter 87, and the dispersed light is received by the detector 88.

The control device 84 controls the whole operation of the color measuring device 80. As the control device 84, for example, a computer dedicated to color measurement is able to be used in addition to a general personal computer or a personal digital assistant. Then, the control device 84 includes a light source control unit 90, a color measuring sensor control unit 91, a measured color processing unit 92, and the like. The light source control unit 90 is connected to the light source device 82, and for example, emits white light having predetermined brightness by outputting a predetermined control signal to the light source device 82 on the basis of a setting input of a manipulator. The color measuring sensor control unit 91 is connected to the wavelength control unit 89 of the color measuring sensor 83. For example, the color measuring sensor control unit 91 sets a wavelength of light which is received by the color measuring sensor 83 on the basis of the setting input of the manipulator. Then, the color measuring sensor control unit 91 outputs a control signal to the effect of detecting a received amount of the light having the set wavelength to the wavelength control unit 89. Accordingly, the wavelength control unit 89 drives the light filter 87 on the basis of the control signal. The measured color processing unit 92 analyzes chromaticity of the measurement object 81 from the received amount which is detected by the detector 88.

In the light filter 87, any one of the optical module 1, the optical module 60, and the optical module 66 described above is used. The optical module 1, the optical module 60, and the optical module 66 have a structure in which a protrusion referred to as a "hillock" or a "whisker" is prevented from appearing in the movable reflective film 35 and the fixed reflective film 44. Accordingly, the color measuring device 80 may be an electronic device including the light filter 87 which is able to transmit light having a predetermined wavelength with high accuracy for a long period of time.

### Fifth Embodiment

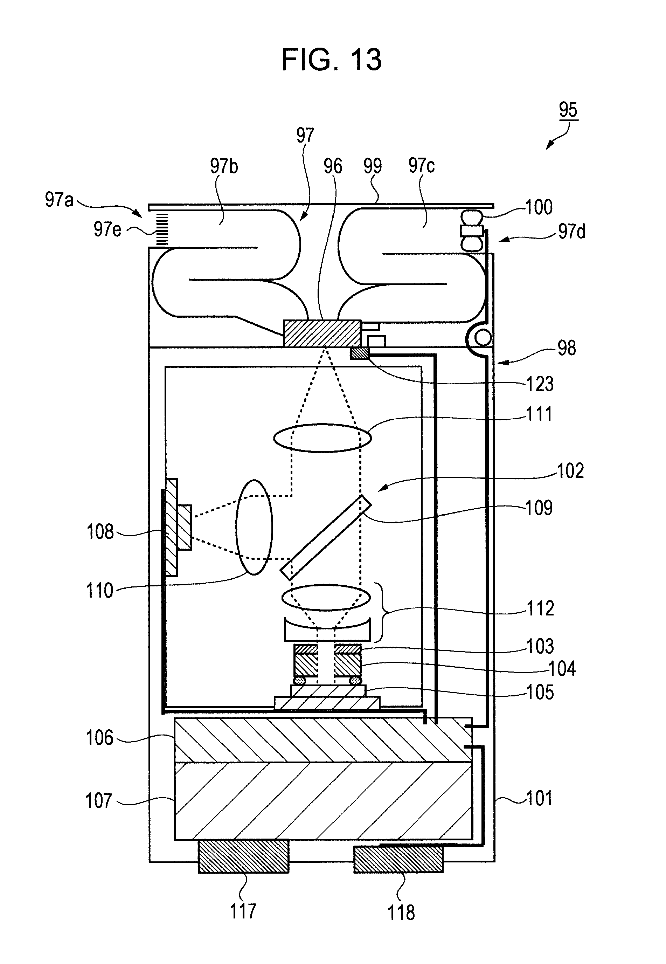

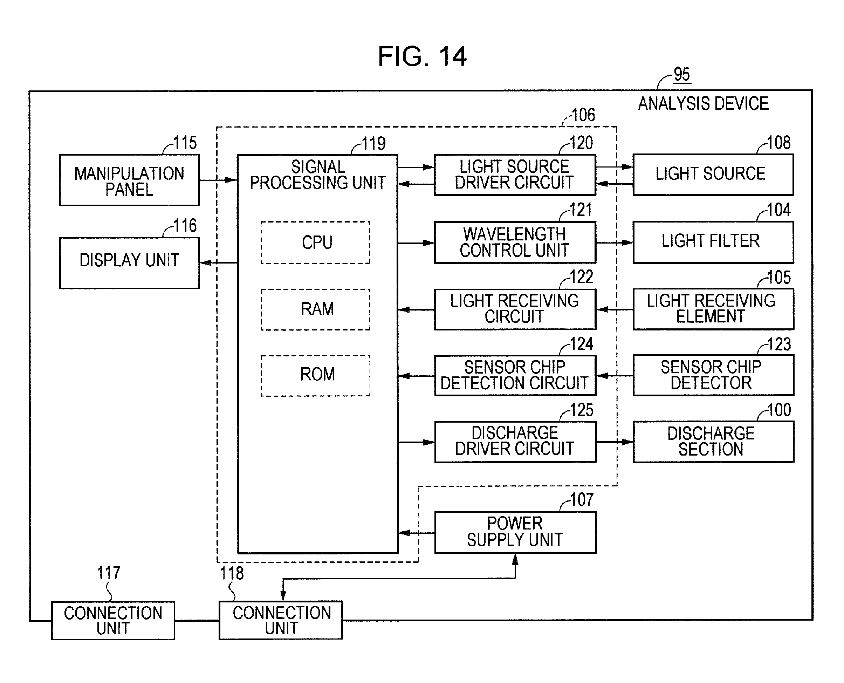

Next, one embodiment of a gas detecting device including the optical module 1 described above will be described with reference to Fig. 13 and Fig. 14. The gas detecting device, for example, is used in a gas leakage detector for a vehicle, a photoacoustic rare gas detector for a breath test, and the like which detect specific gas with high sensitivity. Furthermore, the description of the same configuration as that of the embodiment described above will be omitted.

Fig. 13 is a schematic front view illustrating a configuration of a gas detecting device, and Fig. 14 is a block diagram illustrating a configuration of a control system of the gas detecting device. As illustrated in Fig. 13, a gas detecting device 95 as an electronic device is provided with a sensor chip 96, a flow path 97 including a suction port 97a, a suction flow path 97b, a discharge flow path 97c, and a discharge port 97d, and a main body unit 98.

The main body unit 98 includes a sensor unit cover 99, a discharge section 100, and a housing 101. By opening and closing the sensor unit cover 99, the flow path 97 is able to be attached or detached. Further, the main body unit 98 is provided with a detection device including an optical unit 102, a filter 103, a light filter 104, a light receiving element 105 (a detection unit), and the like. In the light filter 104, any one of the optical module 1, the optical module 60, and the optical module 66 described above is used.

Further, the main body unit 98 includes a control unit 106 (a processing unit) which processes a detected signal and controls the detection unit, a power supply unit 107 supplying power, and the like. The optical unit 102 includes a light source 108 emitting light, a beam splitter 109, a lens 110, a lens 111, and a lens 112. The beam splitter 109 reflects light incident from the light source 108 to the sensor chip 96 side, and transmits the light incident from the sensor chip side to the light receiving element 105 side.

As illustrated in Fig. 14, the gas detecting device 95 is provided with a manipulation panel 115, a display unit 116, a connection unit 117 for interfacing with the outside, and the power supply unit 107. When the power supply unit 107 is a secondary battery, a connection unit 118 for charging may be included. Further, the control unit 106 of the gas detecting device 95 is provided with a signal processing unit 119 including CPU or the like, and a light source driver circuit 120 for controlling the light source 108. Further, the control unit 106 is provided with a wavelength control unit 121 as a control unit for controlling the light filter 104, and a light receiving circuit 122 receiving a signal from the light receiving element 105. The wavelength control unit 121 has a function of the control unit 27 in the first embodiment or the control unit 63 in the second embodiment. Further, the control unit 106 includes a sensor chip detector 123 which reads a code of the sensor chip 96, and detects whether or not there is the sensor chip 96, and a sensor chip detection circuit 124 which receives a signal from the sensor chip detector 123. Further, the control unit 106 includes a discharge driver circuit 125 controlling the discharge section 100, and the like.

Next, an operation of the gas detecting device 95 will be described. The sensor chip detector 123 is disposed inside the sensor unit cover 99 in an upper portion of the main body unit 98. The sensor chip detector 123 detects whether or not there is the sensor chip 96. When the signal processing unit 119 detects the detection signal from the sensor chip detector 123, it is determined that the sensor chip 96 is mounted. Then, the signal processing unit 119 outputs a display signal which displays information to the effect that a detection operation is able to be implemented onto the display unit 116.

Then, the manipulation panel 115 is manipulated by the manipulator, and an instruction signal to the effect that detection processing is started from the manipulation panel 115 is output to the signal processing unit 119. First, the signal processing unit 119 outputs the instruction signal of driving the light source to the light source driver circuit 120, and actuates the light source 108. When the light source 108 is driven, stable laser light which is linear polarized light at a single wavelength is emitted from the light source 108. In the light source 108, a temperature sensor or a light intensity sensor is embedded, and information of the sensor is output to the signal processing unit 119. When the signal processing unit 119 determines that the light source 108 is stably operated on the basis of a temperature or light intensity input from the light source 108, the signal processing unit 119 controls the discharge driver circuit 125 and actuates the discharge section 100. Accordingly, a gaseous sample including a target substance (gas molecules) to be detected is guided to the suction flow path 97b from the suction port 97a, to the inside of the sensor chip 96, to the discharge flow path 97c, and to the discharge port 97d. Furthermore, in the suction port 97a, a dust removing filter 97e is disposed, and comparatively large dust, a part of moisture vapor, or the like is removed.

The sensor chip 96 is an element in which a plurality of metal nanostructures is assembled, and is a sensor using localized surface plasmon resonance. In this sensor chip 96, an enhanced electric field is formed between the metal nanostructures using the laser light. When the gas molecules are inserted into the enhanced electric field, raman scattering light and rayleigh scattering light including information of molecular vibration occur. The rayleigh scattering light or the raman scattering light is incident on the filter 103 through the optical unit 102. The rayleigh scattering light is separated by the filter 103, and the raman scattering light is incident on the light filter 104.

Then, the signal processing unit 119 outputs a control signal to the wavelength control unit 121. Accordingly, the wavelength control unit 121 drives an actuator of the light filter 104, and disperses the raman scattering light corresponding to the gas molecules to be detected in the light filter 104. When the dispersed light is received by the light receiving element 105, a light receiving signal according to a received amount of light is output to the signal processing unit 119 through the light receiving circuit 122.

The signal processing unit 119 compares obtained spectrum data of the raman scattering light corresponding to the gas molecules to be detected and data stored in the ROM. Thus, whether or not the gas molecules to be detected are target gas molecules is determined, and a substance is specified. In addition, the signal processing unit 119 displays result information on the display unit 116, and outputs the result information to the outside from the connection unit 117.

The gas detecting device 95 in which the raman scattering light is dispersed by the light filter 104, and gas detection is performed from the dispersed raman scattering light is exemplified. A gas detecting device in which the gas detecting device 95 detects gas-specific absorbancy and specifies a type of gas may be used. In this case, the light filter 104 is used in a gas sensor in which gas is input into a sensor, and light which is absorbed by the gas among incident lights is detected. Then, the gas detecting device is an electronic device which analyzes and determines the gas input into the sensor by the gas sensor. According to a configuration of the gas detecting device 95, it is possible to detect a component of the gas by using the light filter 104.

In the light filter 104, any one of the optical module 1, the optical module 60, and the optical module 66 described above is used. The optical module 1, the optical module 60, and the optical module 66 have a structure in which a protrusion referred to as a "hillock" or a "whisker" is prevented from appearing in the movable reflective film 35 and the fixed reflective film 44. Accordingly, the gas detecting device 95 may be an electronic device including the light filter 104 which is able to transmit light having a predetermined wavelength with high accuracy for a long period of time.

### Sixth Embodiment

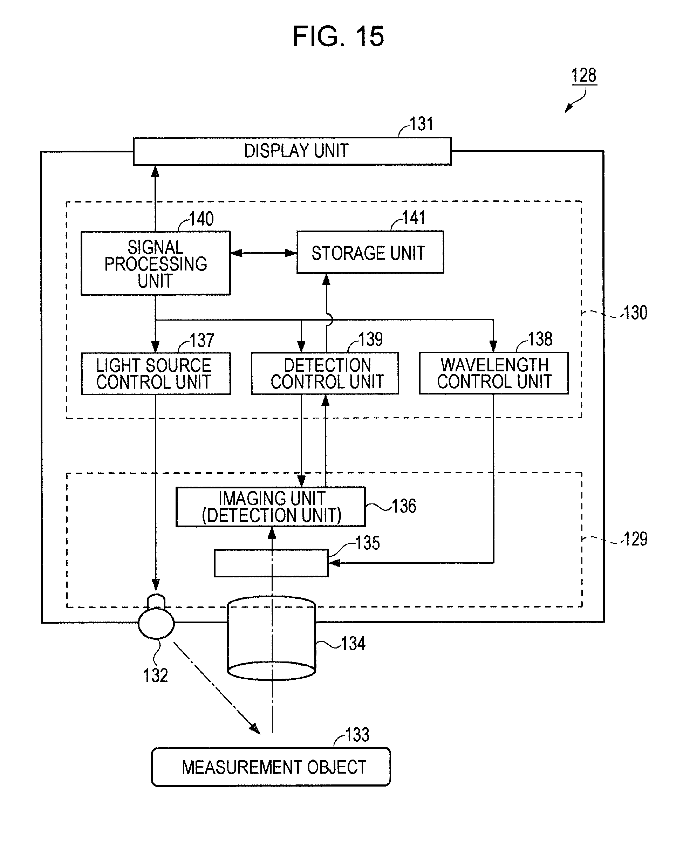

Next, one embodiment of a food analysis device including the optical module 1 described above will be described with reference to Fig. 15. The optical module 1, the optical module 60, and the optical module 66 described above are able to be used in a substance component analysis device such as a non-invasive measuring device for saccharides using near-infrared ray dispersion or a non-invasive measuring device for information such as food, a living body, and minerals. The food analysis device is one of the substance component analysis devices. Furthermore, the description of the same configuration as that of the embodiment described above will be omitted.

Fig. 15 is a block diagram illustrating a configuration of a food analysis device. As illustrated in Fig. 15, a food analysis device 128 as an electronic device includes a detector 129, a control unit 130, and a display unit 131. The detector 129 includes a light source 132 emitting light, an imaging lens 134 into which the light from a measurement object 133 is introduced, and a light filter 135 dispersing the light introduced from the imaging lens 134. In the light filter 135, any one of the optical module 1, the optical module 60, and the optical module 66 described above is used. Further, the detector 129 includes an imaging unit 136 (a detection unit) detecting dispersed light.

The control unit 130 includes a light source control unit 137 which performs on-off control of the light source 132 and brightness control when the light source 132 is turned on, and a wavelength control unit 138 as a control unit which controls the light filter 135. The wavelength control unit 138 has a function of the control unit 27 in the first embodiment or the control unit 63 in the second embodiment. Further, the control unit 130 includes a detection control unit 139 which controls the imaging unit 136 and acquires a dispersed image imaged by the imaging unit 136, a signal processing unit 140, and a storage unit 141.

When the food analysis device 128 is driven, the light source 132 is controlled by the light source control unit 137, and light is emitted from the light source 132 to the measurement object 133. Then, the light reflected by the measurement object 133 is incident on the light filter 135 through the imaging lens 134. The light filter 135 is driven by controlling the wavelength control unit 138. Accordingly, it is possible to take out the light having a desired wavelength from the light filter 135 with high accuracy. Then, the taken out light, for example, is imaged by the imaging unit 136 including a CCD camera or the like. In addition, the imaged light is accumulated in the storage unit 141 as a dispersed image. In addition, the signal processing unit 140 controls the wavelength control unit 138 and changes a voltage value which is applied to the light filter 135, and acquires a dispersed image for each wavelength.

Then, the signal processing unit 140 performs arithmetic processing with respect to data of each pixel in each image accumulated in the storage unit 141, and obtains a spectrum in each of the pixels. In addition, in the storage unit 141, information relevant to the component of the food with respect to the spectrum is stored. The signal processing unit 140 analyzes data of the obtained spectrum on the basis of the information relevant to the food stored in the storage unit 141. Then, the signal processing unit 140 obtains a food component and each food component content included in the measurement object 133. In addition, the signal processing unit 140 is able to calculate food calories, freshness, and the like from the obtained food component and the content. Further, a spectrum distribution in the image is analyzed, and thus it is possible for the signal processing unit 140 to perform extraction with respect to a portion in which freshness decreases among the foods to be inspected, and the like. Further, the signal processing unit 140 is able to perform detection with respect to foreign particles included in the food, and the like. Then, the signal processing unit 140 displays information such as the component or the content, or the calories or the freshness of the food to be inspected which are obtained as described above on the display unit 131.

In the light filter 135, any one of the optical module 1, the optical module 60, and the optical module 66 described above is used. The optical module 1, the optical module 60, and the optical module 66 have a structure in which a protrusion referred to as a "hillock" or a "whisker" is prevented from appearing in the movable reflective film 35 and the fixed reflective film 44. Accordingly, the food analysis device 128 may be an electronic device including the light filter 135 which is able to transmit light having a predetermined wavelength with high accuracy for a long period of time.

In addition, according to approximately the same configuration as that of the food analysis device 128, the food analysis device 128 is also able to be used as a non-invasive measuring device for information other than the information described above. For example, the food analysis device 128 is able to be used as a living body analysis device which performs analysis with respect to a biogenic substance such as measurement, analysis, and the like with respect to a body fluid component such as blood. As this living body analysis device, for example, the food analysis device 128 is able to be used in a device measuring a body fluid component such as blood. In addition, in case of a device detecting ethyl alcohol, the food analysis device 128 is able to be used in an intoxicated driving prevention device detecting a drunk state of a driver. In addition, the food analysis device 128 is also able to be used as an electronic endoscopic system including this living body analysis device. Further, the food analysis device 128 is also able to be used as a mineral analysis device which performs component analysis with respect to minerals.

Further, an electronic device using the optical module 1, the optical module 60, or the optical module 66 described above is able to be applied to the following device. For example, intensity of light having each wavelength is changed over time, and thus it is possible to transmit data by the light having each wavelength, and in this case, light having a specific wavelength is dispersed by the optical module 1, the optical module 60, or the optical module 66 described above. Then, the light is received by the light receiving unit, and thus it is possible to extract data transmitted by the light having a specific wavelength, and the data of the light having each wavelength is processed by the electronic device extracting the data by the optical module 1, the optical module 60, or the optical module 66 described above, and thus it is possible to perform optical communication of a plurality of wavelengths.

### Seventh Embodiment

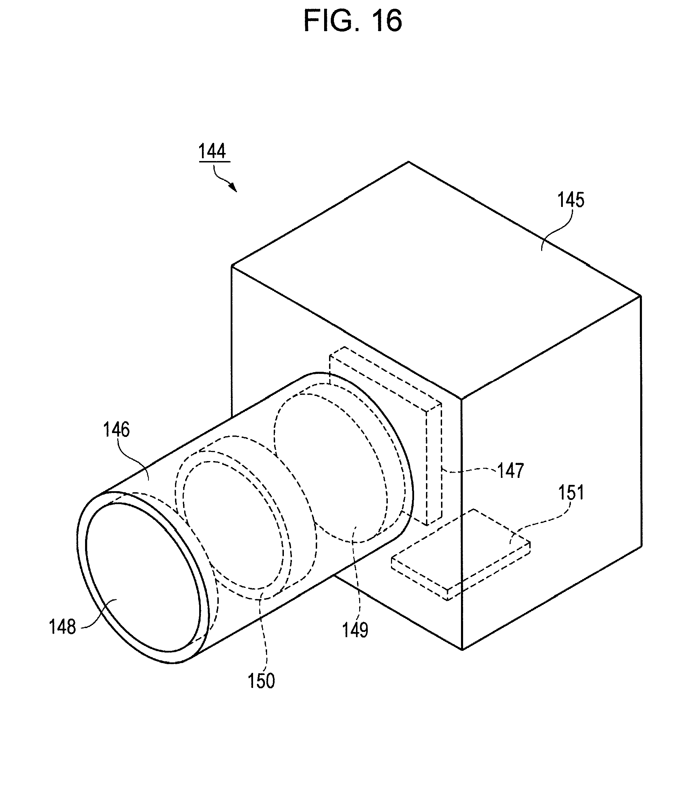

Next, one embodiment of a spectroscopic camera including the optical module 1 described above will be described with reference to Fig. 16. The optical module 1, the optical module 60, or the optical module 66 described above is able to be used in a spectroscopic camera, a dispersion analyzer, or the like which disperses light and images a dispersed image. As an example of this spectroscopic camera, an infrared ray camera in which the optical module 1, the optical module 60, or the optical module 66 described above are embedded is included. Furthermore, the description of the same configuration as that of the embodiment described above will be omitted.

Fig. 16 is a schematic perspective view illustrating a configuration of a spectroscopic camera. As illustrated in Fig. 16, a spectroscopic camera 144 as an electronic device includes a camera main body 145, an imaging lens unit 146, and an imaging unit 147. The camera main body 145 is a portion which is grasped and manipulated by the manipulator.

The imaging lens unit 146 is connected to the camera main body 145, and guides incident image light to the imaging unit 147. In addition, the imaging lens unit 146 includes an objective lens 148, an image forming lens 149, and a light filter 150 disposed between the objective lens 148 and the image forming lens 149. In the light filter 150, the optical module 1, the optical module 60, or the optical module 66 described above is used. Further, in the camera main body 145, a wavelength control unit 151 as a control unit which controls a wavelength of light dispersed by the light filter 150 is disposed. The wavelength control unit 151 has a function of the control unit 27 in the first embodiment or the control unit 63 in the second embodiment.

The imaging unit 147 includes a light receiving element, and images the image light guided by the imaging lens unit 146. In the spectroscopic camera 144, the light filter 150 transmits light having a wavelength to be imaged, and the imaging unit 147 images a dispersed image of light having a desired wavelength.

In the light filter 150, any one of the optical module 1, the optical module 60, and the optical module 66 described above is used. The optical module 1, the optical module 60, and the optical module 66 have a structure in which a protrusion referred to as a "hillock" or a "whisker" is prevented from appearing in the movable reflective film 35 and the fixed reflective film 44. Accordingly, the spectroscopic camera 144 may be an electronic device including the light filter 150 which is able to transmit light having a predetermined wavelength with high accuracy for a long period of time.

Further, an optical module in which the light filter 150 is assembled may be used as a bandpass filter. For example, the optical module is also able to be used as an optical laser device in which only light in a narrow bandwidth based on a predetermined wavelength among light in a predetermined wavelength region emitted by a light emitting element is dispersed and transmitted by the light filter 150. In addition, the optical module may be used as a living body verifier, and for example, is able to be applied to a verifier of blood vessel, fingerprint, retina, iris, and the like using light in a near-infrared region or in a visible region. Further, the optical module is able to be used in a concentration detection device. In this case, infrared energy (infrared light) emitted from a substance is dispersed and analyzed by the optical module 1, the optical module 60, or the optical module 66 described above, and concentration of a test specimen among samples is measured.

As described above, the optical module 1, the optical module 60, or the optical module 66 described above is also able to be applied to any device in which predetermined light is dispersed from incident light. Then, the optical module 1, the optical module 60, or the optical module 66 is able to efficiently disperse a plurality of wavelengths as described above. For this reason, it is possible to efficiently perform measurement with respect to a spectrum of a plurality of wavelength and detection with respect to a plurality of components. Therefore, it is possible to promote reduction in size of an electronic device compared to a device of the related art in which a desired wavelength is taken out by a plurality of optical modules dispersing a single wavelength, and for example, the optical module 1 is able to be preferably used as a portable or in-vehicle optical device. At this time, the optical module 1, the optical module 60, or the optical module 66 described above is able to transmit light having a predetermined wavelength with high long-term reliability and high accuracy, and thus an electronic device using the optical module is able to take out and use light of a plurality of wavelengths with high quality for a long period of time.

Furthermore, this embodiment is not limited to the above-described embodiments, and is able to be variously changed or improved by a person with ordinary skill in the art within a technical idea of the invention. Modification

Example will be described as follows.

### Modification Example 1

In the first embodiment described above, the movable reflective film 35 is interposed between the conductive film 32 and the protective film 36, and the fixed reflective film 44 is interposed between the conductive film 38 and the protective film 45. When a surface state of any one of the movable reflective film 35 and the fixed reflective film 44 is rarely degraded, a conductive film and a protective film interposing a reflective film which is less degraded may be omitted. It is possible to improve productivity by simplifying a manufacturing step. Modification Example 2

In the first embodiment described above, the movable reflective film 35, the conductive film 32, and the protective film 36 have the same planar shape. The conductive film 32 and the protective film 36 may be in the same shape, and may be smaller than the movable reflective film 35. The conductive film 32 and the protective film 36 may be omitted in a place through which the light 28 does not pass. It is possible to reduce a consumed amount configuring the conductive film 32 and the protective film 36. Similarly, the conductive film 38 and the protective film 45 are in the same shape, and may be smaller than the fixed reflective film 44. At this time, it is possible to reduce a consumed amount configuring the conductive film 38 and the protective film 45.

### Modification Example 3

In the first embodiment described above, the fixed electrode 46 is a film different from the fixed electrode terminal 47. The fixed electrode 46 may be integrated with the fixed electrode terminal 47. An aspect in which the fixed electrode 46 is easily manufactured may be selected insofar as the fixed electrode 46 is able to be energized. Similarly, in the first embodiment described above, the movable electrode 37 is a film different from the second terminal 16. The movable electrode 37 may be integrated with the second terminal 16. An aspect in which the movable electrode 37 is easily manufactured may be selected insofar as the movable electrode 37 is able to be energized.

The entire disclosure of Japanese Patent Application No. 2014-038179 filed on 2/28/2014 is expressly incorporated by reference herein.

## Claims

1. A light filter, comprising:
a fixed substrate;
a movable portion which is arranged to face the fixed substrate;
a first reflective film which is disposed on the fixed substrate;
a second reflective film which is disposed on the movable portion and faces the first reflective film; and
a distance control unit which is configured to control a distance between the first reflective film and the second reflective film,
wherein at least one of the first reflective film and the second reflective film is interposed between a first conductive film and a second conductive film, and the first conductive film and the second conductive film are formed of the same material and have the same film thickness.

2. A light filter, comprising:
a fixed substrate;
a movable portion which is arranged to face the fixed substrate;
a first reflective film which is disposed on the fixed substrate;
a second reflective film which is disposed on the movable portion and faces the first reflective film; and
a distance control unit which is configured to control a distance between the first reflective film and the second reflective film,
wherein at least one of the first reflective film and the second reflective film is interposed between a first conductive film and a second conductive film, and the first conductive film and the second conductive film have the same stress distribution.

3. The light filter according to Claim 1 or 2, wherein the first conductive film and the second conductive film are in the same shape.

4. The light filter according to any one of Claims 1 to 3,
wherein a material of the first conductive film and the second conductive film includes IGO.

5. The light filter according to any one of Claims 1 to 4,
wherein the first reflective film and the second reflective film are electrically connected to each other.

6. The light filter according to any one of Claims 1 to 5, further comprising:
a first external terminal which is connected to the first reflective film; and
a second external terminal which is connected to the second reflective film.

7. A light module, comprising:
the light filter according to any one of Claims 1 to 6; and
a containing portion which contains the light filter.

8. An electronic device, comprising:
the light filter according to any one of Claims 1 to 6; and
a control unit which is configured to control the light filter.
